# EUROPEAN PATENT APPLICATION

(11) **EP 4 742 792 A1**
(43) Date of publication of application: **13.05.2026**
(21) Application number: 24835909.3
(22) Date of filing: 19.06.2024
(51) Int. Cl.: H04W 72/0446, H04W 48/10, H04W 72/56, H04W 84/12

(54) **ACCESS POINT, TERMINAL, AND COMMUNICATION METHOD**

(30) Priority: 05.07.2023 JP 2023110803
(71) Applicant: Panasonic Intellectual Property Corporation of America, Torrance, CA 90504 (US)
(72) Inventor: MINOTANI, Jun, Kadoma-shi, Osaka 571-0057 (JP); IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP)
(74) Representative: Grünecker Patent- und Rechtsanwälte PartG mbB
(86) International application number: PCT/JP2024/022299
(87) International publication number: WO 2025/009396

(57) **Abstract**

This access point comprises: a control circuit for determining first information related to setting of a priority transmission period of a first network to which the access point belongs; and a transmission circuit for transmitting the first information to a device in a second network to which the access point does not belong.

## Description

### Technical Field

The present disclosure relates to an access point, a terminal, and a communication method.

### Background Art

As a successor standard to the Institute of Electrical and Electronics Engineers (IEEE) 802.11be (hereinafter, referred to as "11be"), which is a standard of IEEE 802.11, a technical specification of IEEE 802.11bn (hereinafter, referred to as "11bn") is being developed in a Study Group (SG). 11be is also referred to as "Extremely High Throughput (EHT)." In addition, 11bn is also referred to as "Ultra High Reliability (UHR)."

### Citation List

### Non-Patent Literature (hereinafter, referred to as "NPL")

NPL 1
   IEEE P802.11be™/D3.0, January 2023
NPL 2
   IEEE 802.11-23/0291r0, R-TWT Multi-AP Coordination
NPL 3
   IEEE 802.11-23/0293r0, Follow-up on TWT based Multi-AP Coordination

### Summary of Invention

However, a method for controlling signal transmission in radio communication such as a wireless LAN has not been sufficiently studied.

A non-limiting embodiment of the present disclosure facilitates providing an access point, a terminal, and a communication method each capable of improving the efficiency of transmission control in radio communication.

An access point according to an embodiment of the present disclosure is an access point and includes: control circuitry, which, in operation, determines first information related to a configuration of a priority transmission period of a first network to which the access point belongs; and transmission circuitry, which, in operation, transmits the first information to an apparatus of a second network to which the access point does not belong.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating a communication example of Restricted-Target Wake Time (R-TWT);
FIG. 2 is another diagram illustrating the communication example of R-TWT;
FIG. 3 is a diagram illustrating an example of a user priority and a traffic Access Category (AC) for each Traffic Identifier (TID);
FIG. 4 is a block diagram illustrating a configuration example of a part of an AP;
FIG. 5 is a block diagram illustrating a configuration example of a part of a terminal;
FIG. 6 is a diagram illustrating an example of a transmission and reception sequence by the access point (AP) and a station (STA);
FIG. 7 is a diagram illustrating an example of including R-TWT information in a Management frame and broadcasting the Management frame;
FIG. 8 is a block diagram illustrating a configuration example of the AP;
FIG. 9 is a block diagram illustrating a configuration example of the terminal;
FIG. 10 is a diagram illustrating an example of a transmission and reception sequence by the AP and the STA;
FIG. 11 is a diagram illustrating an example of including R-TWT information in a Public action frame and transmitting the Public action frame;
FIG. 12 is a diagram illustrating an example of definition of the Public action frame;
FIG. 13 is a diagram illustrating an example of a coordinated group;
FIG. 14 is a diagram illustrating an example of signaling overlap permission information using R-TWT Traffic Info;
FIG. 15 is a diagram illustrating an example of overlap permission information;
FIG. 16 is a diagram illustrating a configuration example of an R-TWT Service Period (SP);
FIG. 17 is another diagram illustrating the configuration example of the R-TWT SP;
FIG. 18 is still another diagram illustrating the configuration example of the R-TWT SP;
FIG. 19 is a diagram illustrating an example of Multi-AP bitmap signaling using Traffic Info Control;
FIG. 20 is a diagram illustrating an example of Multi-AP bitmap signaling using Restricted TWT Traffic Info;
FIG. 21 is a diagram illustrating an example of Multi-AP Type signaling using Traffic Info Control;
FIG. 22 is a diagram illustrating an example of the Multi-AP Type;
FIG. 23 is a diagram illustrating an example of signaling a link type for which overlapping transmission of a Coordinated Spatial Reuse (C-SR) signal is allowed;
FIG. 24 is a diagram illustrating an example of signaling a frame type for which overlapping transmission of a C-SR signal is allowed;
FIG. 25 is a diagram illustrating an example of signaling an Association ID (AID) for which overlapping transmission of a C-SR signal is allowed;
FIG. 26 is a diagram illustrating an example of signaling a time slot in which overlapping transmission of a C-SR signal is allowed;
FIG. 27 is a diagram illustrating examples of time slots in the R-TWT SP;
FIG. 28 is a diagram illustrating an example of signaling a time duration in which overlapping transmission of a C-SR signal is allowed;
FIG. 29 is a diagram illustrating an example of a time duration in the R-TWT SP;
FIG. 30 is a diagram illustrating an example of signaling an interference level at which overlapping transmission of a C-SR signal is allowed;
FIG. 31 is a diagram illustrating an example of a Multi-AP element;
FIG. 32 is a diagram illustrating an example of signaling a frequency resource common to coordination APs;
FIG. 33 is a diagram illustrating exemplary frequency resources common to the coordination APs;
FIG. 34 is a diagram illustrating an example of signaling the frequency resource common to the coordination APs;
FIG. 35 is another diagram illustrating the example of signaling the frequency resource common to the coordination APs;
FIG. 36 is a diagram illustrating a configuration example of the frequency resource common to the coordination APs;
FIG. 37 is a diagram illustrating an example of negotiation of the R-TWT;
FIG. 38 is another diagram illustrating the example of negotiation of the R-TWT;
FIG. 39 is a diagram illustrating an example of signaling a Basic Service Set (BSS) type;
FIG. 40 is another diagram illustrating the example of signaling the BSS type;
FIG. 41 is a diagram illustrating examples of Restricted TWT Schedule Info;
FIG. 42 is a diagram illustrating an example of signaling overlap permission information of uplink (UL) communication of the STA;
FIG. 43 is a diagram illustrating an example of the UL communication of the STA;
FIG. 44 is a diagram illustrating a configuration example of a transmission period;
FIG. 45 is another diagram illustrating the configuration example of the transmission period;
FIG. 46 is still another diagram illustrating the configuration example of the transmission period; and
FIG. 47 is a diagram illustrating an example of indicating the R-TWT.

### Description of Embodiments

Hereinafter, embodiments of the present disclosure will be described in detail with reference to the accompanying drawings.

In 11be, Restricted-Target Wake Time (R-TWT) for configuring a period in which low latency traffic is transmitted with priority has been standardized (for example, see NPL 1). The low latency traffic is also referred to as delay-sensitive traffic, Low Latency (LL) traffic, or latency sensitive traffic.

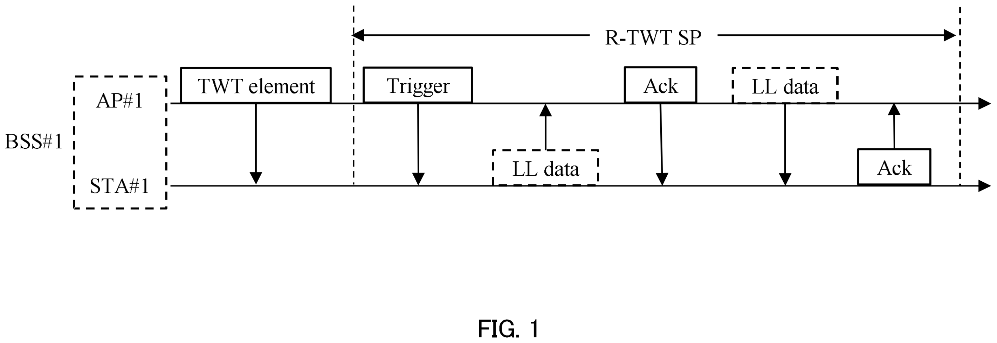

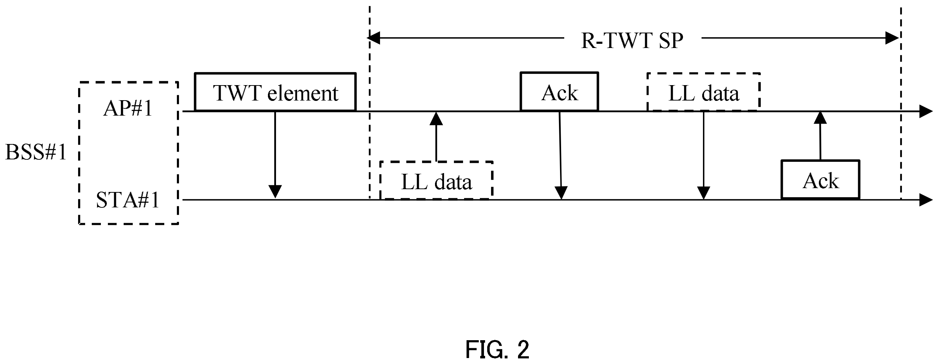

FIGS. 1 and 2 each illustrate a communication example for R-TWT.

As illustrated in FIGS. 1 and 2, an access point (AP, or referred to as base station) indicates information related to R-TWT to a terminal (Station: STA, or referred to as non-AP STA, hereinafter, referred to as "STA") connected (or associated) to the AP, using a TWT element. The information related to R-TWT includes, for example, a period of the R-TWT, an AP and a STA that participate in the R-TWT, a type of the R-TWT, or traffic that is a target for the R-TWT (referred to as low latency traffic, delay-sensitive traffic, R-TWT traffic, and the like, hereinafter, referred to as "low latency traffic").

For example, the information on the R-TWT period may include an R-TWT Service Period (SP), which is a transmission period (for example, priority transmission period) for low latency traffic.

The AP and the STA that participate in the R-TWT are referred to as, for example, a "member AP" and a "member STA," respectively. The member AP and the member STA have priority for transmission of low latency traffic in the R-TWT SP.

The information on the type of the R-TWT may include, for example, information on whether the AP transmits at least one Trigger frame in the R-TWT SP. For example, a case where the TWT element indicates that the AP transmits a Trigger frame in the R-TWT SP is referred to as "Trigger-enable R-TWT," and the AP transmits the Trigger frame first in the R-TWT SP (for example, see FIG. 1). In addition, for example, a case where the TWT element does not indicate that the AP transmits a Triger frame in the R-TWT SP is referred to as "non-Trigger-enable R-TWT" (or also simply referred to as "R-TWT"), and the AP and the STA that are the members of the R-TWT perform carrier sensing (for example, enhanced distributed channel access (EDCA) carrier sensing) to determine the AP and the STA that is to transmit low latency traffic (for example, referred to as "LL data") (for example, see FIG. 2).

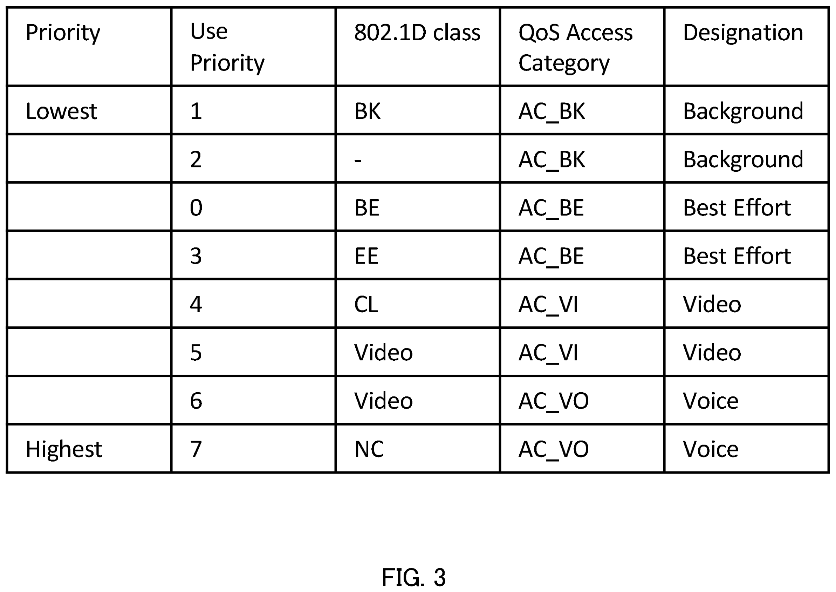

For the information on the low latency traffic in the R-TWT SP, an information type (for example, Traffic Identifier (TID)) treated as low latency traffic on each link (downlink (DL) or uplink (UL)) may be indicated using a bitmap. For example, each bit of the bitmap may correspond to a TID. For example, as illustrated in FIG. 3, the TID corresponds to the user priority of a Quality of Service (QoS) data frame and the access category (AC) of the traffic. For example, when the bit of the bitmap is 0, it may be indicated that the TID corresponding to the bit is not treated as low latency traffic in the R-TWT SP. When the bit of the bitmap is 1, for example, it may be indicated that the TID corresponding to the bit is treated as low latency traffic in the R-TWT SP.

In addition, the AP and the STA that support R-TWT may end a channel usage period (transmission opportunity (TXOP)) acquired by each of the AP and the STA before the start of the R-TWT SP, so as not to interfere with the transmission of low latency traffic in the R-TWT SP.

In 11bn, Multi-AP coordination in which a plurality of APs performs transmission in coordination with each other is being discussed. As one of the Multi-AP coordination, R-TWT coordination (hereinafter, referred to as "Multi-AP R-TWT") in which a plurality of APs performs coordinated control of R-TWT is being discussed (for example, see NPLs 2 and 3).

The control method for R-TWT coordinated transmission by a plurality of APs has not been sufficiently studied.

In a non-limiting example of the present disclosure, a method for improving the efficiency of R-TWT coordinated transmission by a plurality of APs will be described.

For example, an AP according to an embodiment of the present disclosure determines control related to low latency traffic, determines whether transmission is allowed based on the control information related to low latency traffic, and performs scheduling. For example, by sharing information on R-TWT between networks (for example, basic service sets (BSSs)) to which an AP and an STA belong and controlling whether overlapping transmission is allowed in the R-TWT SP (priority transmission period) of each BSS, reduction of interference to low latency traffic and simultaneous transmission by a plurality of BSSs is enabled.

Here, the overlap in the R-TWT SP of each BSS means that all or a part of the time period of the R-TWT SP configured in each BSS (for example, configured by each AP) overlap, or all or part of the time period and the target channel of the R-TWT SP overlap. Here, the target channel may be a frequency channel (for example, may be specified by R-TWT element) on which the R-TWT SP is configured or an operating channel of each AP (for example, channel indicated by a Beacon frame). In addition, in another example, the participation of the AP/STA of another BSS in one R-TWT SP (for example, R-TWT SP configured by one AP) is referred to as overlap in the R-TWT SP of each BSS.

In addition, the overlapping transmission in the R-TWT SP of each BSS refers to that the AP/STA that is the member of the R-TWT performs transmission in the overlapping time period of the R-TWT SP, using time division access (transmission) by Carrier Sense Multiple Access (CSMA), Enhanced Distributed Channel Access (EDCA), Coordinated Time Division Multiple Access (C-TDMA), or the like, frequency multiplexed transmission by Orthogonal Frequency Division Multiple Access (OFDMA), Coordinated OFDMA (C-OFDMA), Subchannel Selective Transmission (SST), or the like, or spatial or MIMO multiplexed transmission by Multi-User Multiple Input Multiple Output (MU-MIMO), Coordinated MIMO (C-MIMO), Spatial Reuse (SR), Coordinated SR (C-SR), Joint Transmission (JT), or the like.

### [Configuration of Radio Communication System]

The radio communication system according to the embodiment of the present disclosure may include, for example, AP 100 and STA 200. In the radio communication system, two or more APs 100 may be present, and two or more STAs 200 may be present. For example, AP 100 transmits a downlink (DL) signal to another AP or STA 200. In addition, STA 200 transmits an uplink (UL) signal based on the signal received from AP 100.

In the embodiment of the present disclosure, AP 100 shares information related to the R-TWT (for example, priority transmission period) (hereinafter, referred to as R-TWT information) of the network (for example, BSS) to which AP 100 belongs, with at least one of AP 100 and STA 200 (for example, AP and/or STA(s), hereinafter, also referred to as "AP/STA") belonging to a network to which AP 100 does not belong (for example, overlapped BSS (OBSS)).

Here, the R-TWT information may include, for example, information on the AP and the STA that participate in the R-TWT in which low latency traffic is transmitted (for example, member information on the R-TWT), information on a start timing or a time duration of the R-TWT SP, information on an R-TWT type (for example, Trigger-based R-TWT or a non-Trigger-based R-TWT), and information on a link type or a traffic type (for example, TID for each of DL and UL) of the low latency traffic that is transmitted with priority in the R-TWT SP. The R-TWT information may be shared using a TWT element, for example.

AP 100 can perform transmission control in consideration of the R-TWT of OBSS by sharing the R-TWT information with the AP/STA of the OBSS. For example, AP 100 and STA 200 can suppress interference to the low latency traffic transmitted by the AP/STA of the OBSS by ending TXOP before the start of the R-TWT of the OBSS.

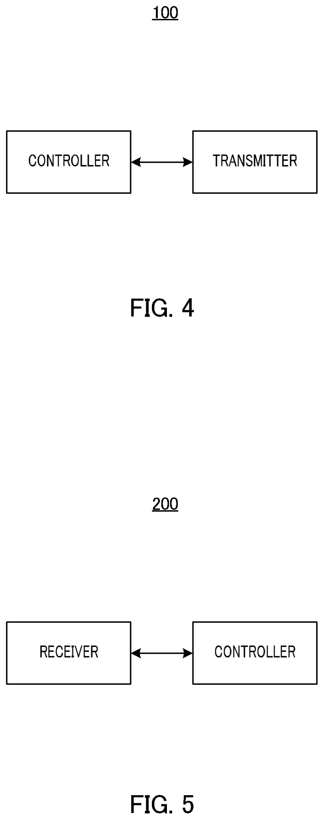

FIG. 4 is a block diagram illustrating a configuration example of a part of AP 100 according to the embodiment of the present disclosure. In AP 100 illustrated in FIG. 4, a controller (for example, corresponding to control circuitry) determines first information (for example, R-TWT information) related to the configuration of the priority transmission period of the first network (for example, BSS) to which AP 100 belongs. A transmitter (for example, corresponding to transmission circuitry) transmits the first information to an apparatus (for example, AP/STA) of a second network (for example, OBSS) to which AP 100 does not belong.

FIG. 5 is a block diagram illustrating a configuration example of a part of STA 200 according to the embodiment of the present disclosure. In STA 200 illustrated in FIG. 5, a receiver (for example, corresponding to reception circuitry) receives, in the first network (for example, BSS) to which STA 200 belongs, information (for example, R-TWT information) related to the configuration of the priority transmission period of the second network (for example, OBSS) to which STA 200 does not belong. The controller (for example, corresponding to control circuitry) controls transmission or reception based on the received information.

### (Embodiment 1)

In the present embodiment, AP 100 broadcasts R-TWT information to STA 200 served by AP 100 and the AP/STA of OBSS.

In the following, as an example, a method will be described in which AP 100 broadcasts R-TWT information to STA 200 served by AP 100 and the AP/STA of OBSS and transmits and receives a signal with low latency traffic in the R-TWT SP.

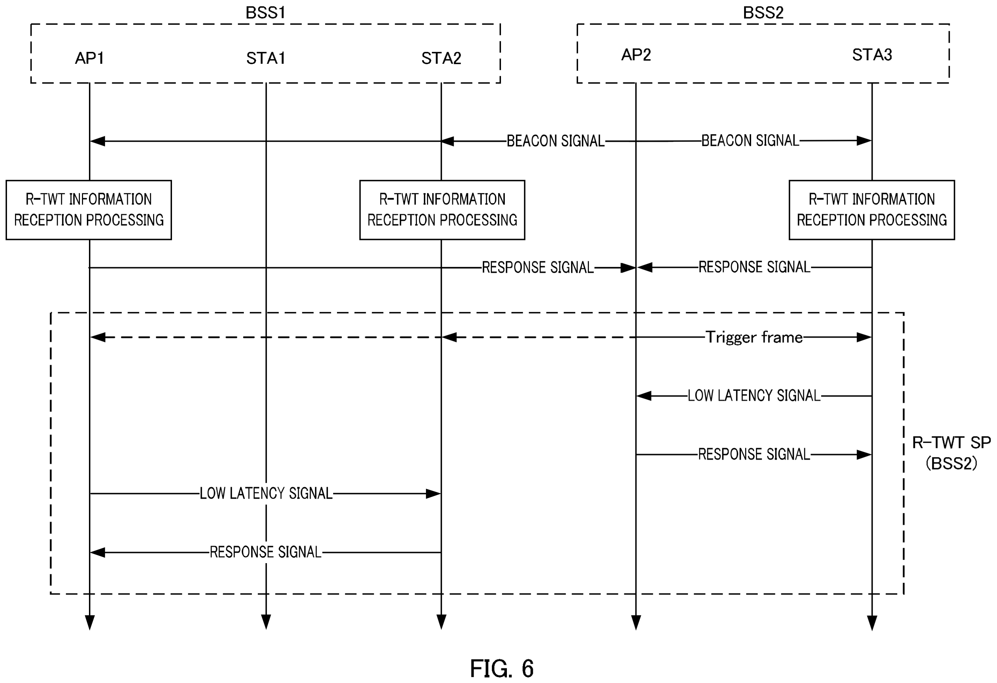

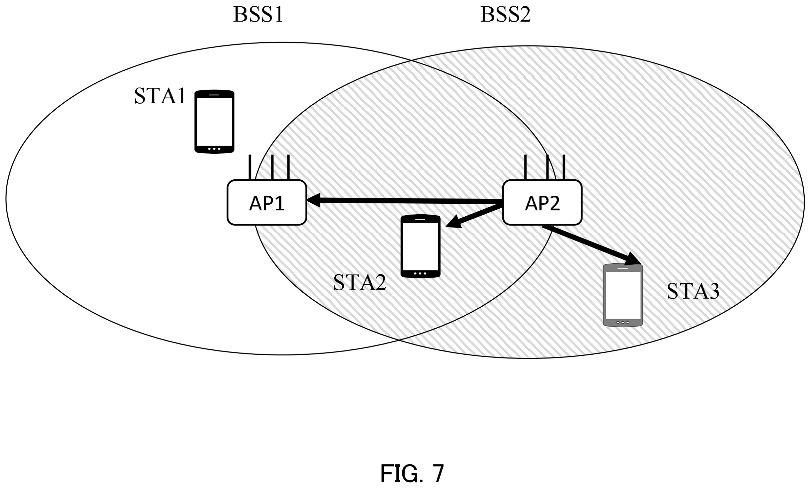

FIG. 6 is a sequence diagram illustrating an operation example of APs 100 (for example, AP 1 and AP 2) and STAs 200 (for example, STA 1, STA 2, and STA 3) according to the present embodiment. In the present embodiment, for example, as illustrated in FIG. 7, BSS 1 is constituted by AP 1, STA 1, and STA 2, and BSS 2 is constituted by AP 2 and STA 3.

In the present embodiment, the R-TWT information is included in a Management frame (for example, Beacon, Association/Reassociation, Probe request/Probe response, or the like) and is shared. In the example of FIG. 6, AP 2 includes the R-TWT information in a Beacon signal, which is a Management frame, and performs broadcast transmission to the AP/STA located within the transmission range of AP 2 (for example, AP 1, STA 2, and STA 3). Note that, in the example of FIGS. 6 and 7, STA 1 is located outside the transmission range of AP 2 and thus does not receive the Beacon signal.

AP 1, STA 2, and STA 3 that have received the Beacon signal perform reception processing on the R-TWT information included in the Beacon signal. For example, AP 1, STA 2, and STA 3 store, in a buffer, the start period of the R-TWT SP of BSS 2, the period length of the R-TWT SP, the type of the R-TWT, and the link type or the traffic type treated as low latency traffic in the R-TWT, which are included in the R-TWT information, and transmit response signals to AP 2.

When the R-TWT SP of BSS 2 is started, low latency traffic is transmitted and received according to the R-TWT type indicated by the R-TWT information. For example, FIG. 6 illustrates an example in which the R-TWT type is Trigger-enable R-TWT. In this case, in the R-TWT SP, AP 2 first transmits a Trigger frame to STA 3 served by AP 2 and requests transmission of a signal with low latency traffic (hereinafter, referred to as "low latency signal"). Note that AP 2 may transmit a low latency signal to AP 3 in the R-TWT SP (not shown).

STA 3 that has received the Trigger frame transmits the low latency signal to AP 2 based on the scheduling information included in the Trigger frame. AP 2 that has received the low latency signal transmits a response signal to STA3.

In addition, as illustrated in FIG. 6, AP 1 and STA2 of BSS 1 (for example, OBSS AP/STA for AP 2) perform carrier sensing after confirming the transmission of the Trigger frame by AP 2, and in a case where the channel to be used for transmission is in an idle state, transmit low latency traffic. For example, in FIG. 6, AP 1 transmits the low latency signal to STA 2, and STA 2 that has received the low latency signal transmits a response signal to AP 1.

Note that, in a case where STA 200 (for example, STA2 of FIG. 6) receives a signal including a R-TWT information transmitted from OBSS AP (for example, AP 2 of FIG. 6), STA 200 may indicate a Measurement report (for example, Measurement report frame or Measurement report element) including the received R-TWT information of the OBSS to the AP (for example, AP 1 of FIG. 6) of the BSS to which the STA belongs. This allows AP100 to receive the R-TWT information of OBSS AP through the relay by STA 200 even in the case where AP 100 cannot directly receive the R-TWT information from the OBSS AP.

As described above, AP 100 broadcasts the R-TWT information to STA 200 served by AP 100 and the AP/STA of OBSS, so that the R-TWT information is shared between the different BSSs. This enables transmission control in consideration of the R-TWT of OBSS. For example, AP 100 and STA 200 may end the TXOP before the start of the R-TWT of OBSS, and may transmit a signal after the start of the R-TWT of the OBSS depending on the carrier sense result. As a result, interference to the low latency traffic transmitted by the AP/STA of the OBSS from the signal transmitted from AP 100 and STA 200 can be suppressed.

### [Configuration Example of AP 100]

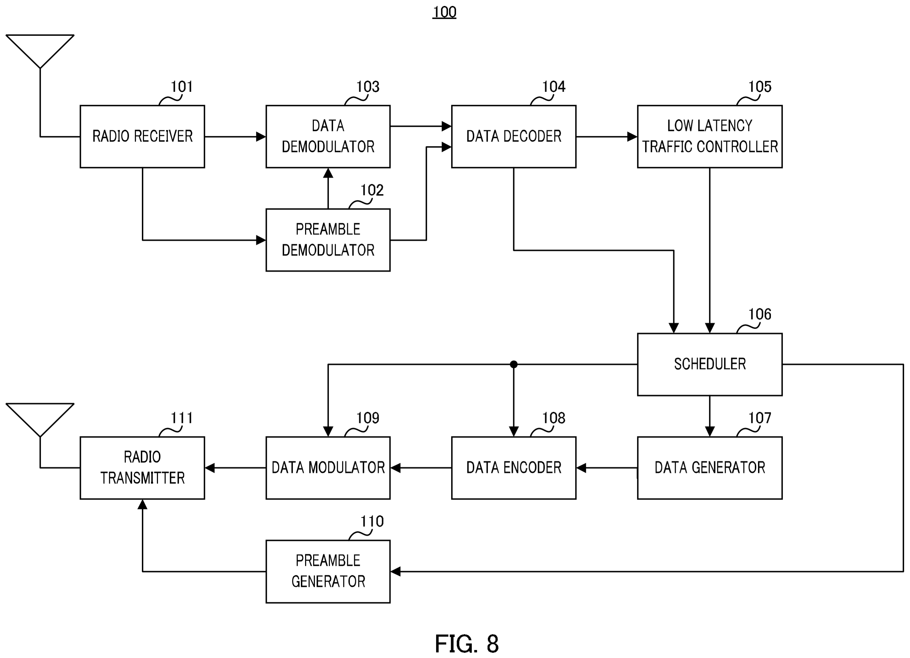

FIG. 8 is a block diagram illustrating a configuration example of AP 100 (for example, downlink radio transmission apparatus).

AP 100 illustrated in FIG. 8 may include, for example, radio receiver 101, preamble demodulator 102, data demodulator 103, data decoder 104, low latency traffic controller 105, scheduler 106, data generator 107, data encoder 108, data modulator 109, preamble generator 110, and radio transmitter 111.

At least one of preamble demodulator 102, data demodulator 103, data decoder 104, low latency traffic controller 105, scheduler 106, data generator 107, data encoder 108, data modulator 109, and preamble generator 110 illustrated in FIG. 8 may be included in the controller illustrated in FIG. 4, and radio transmitter 111 illustrated in FIG. 8 may be included in the transmitter illustrated in FIG. 4.

In FIG. 8, radio receiver 101 receives a signal transmitted from another AP or STA 200 via the antenna, and performs radio reception processing such as downconversion and analog-to-digital (A/D) conversion. Radio receiver 101 divides the signal after the radio reception processing into a Preamble portion (also referred to as preamble signal) and a data portion (also referred to as data signal), outputs the preamble signal to preamble demodulator 102, and outputs the data signal to data demodulator 103.

Preamble demodulator 102 performs Fourier transform (for example, Fast Fourier transform (FFT)) on the preamble signal input from radio receiver 101, and extracts reception control information (for example, frequency bandwidth (BW), modulation and coding scheme (MCS), and error correction code) used for demodulation and decoding of the data signal. In addition, preamble demodulator 102 performs channel estimation based on a reference signal included in the preamble signal, and derives a channel estimation value. Preamble demodulator 102 outputs the reception control information to data demodulator 103 and data decoder 104, and outputs the channel estimation value to data demodulator 103.

Data demodulator 103 performs FFT on the data signal input from radio receiver 101, and demodulates the data signal using the reception control information and the channel estimation value input from preamble demodulator 102. Data demodulator 103 outputs the demodulated data signal to data decoder 104.

Data decoder 104 decodes the demodulated data signal input from data demodulator 103 using the reception control information input from preamble demodulator 102. Data decoder 104 performs error determination on the decoded data signal using a method such as cyclic redundancy check (CRC). In a case where there is no error in the decoded data signal, data decoder 104 outputs the decoded data signal to low latency traffic controller 105 and scheduler 106.

Low latency traffic controller 105 determines (or distinguishes or decides) whether transmission is permitted in the OBSS R-TWT based on the R-TWT information of the AP and the STA in another network (for example, OBSS) (hereinafter, referred to as "OBSS R-TWT information") included in the decoded data signal input from data decoder 104. Low latency traffic controller 105 outputs information on the determination result of the transmission availability in the OBSS R-TWT (hereinafter, referred to as "OBSS R-TWT transmission availability information") to scheduler 106. Here, the determination (or distinguishing or decision) of the transmission availability includes a determination of whether to continue TXOP, whether to start TXOP, whether to start PPDU transmission, whether to start carrier sensing for PPDU transmission, and whether to continue or stop a backoff counter.

The OBSS R-TWT information may include, for example, information related to which BSS the R-TWT information for, information on the AP/STA that participates in the R-TWT, information on the start timing of the R-TWT SP or the time duration of the R-TWT SP, information on the type of the R-TWT, and information on the link type or the traffic type treated as low latency traffic.

In addition, low latency traffic controller 105 outputs, to scheduler 106, R-TWT information of the network (for example, BSS) managed by AP 100 (hereinafter, referred to as "BSS R-TWT information").

Scheduler 106 determines transmission scheduling for the OBSS R-TWT based on the information input from data decoder 104 or the OBSS R-TWT transmission availability information input from low latency traffic controller 105. For example, in a case where transmission is allowed in the OBSS R-TWT, scheduler 106 determines scheduling information for transmitting a signal to STA 200 served by AP 100 or scheduling information for the signal (for example, Trigger frame) prompting STA 200 served by AP 100 to transmit low latency traffic, and outputs the scheduling information to data generator 107, data encoder 108, data modulator 109, and preamble generator 110.

The scheduling information may include, for example, at least one of destination information, information on the link type or the traffic type treated as low latency traffic, information on a resource (for example, frequency resource or time resource) that can be used in the R-TWT, an MCS and error correction code, and information on transmission power.

In addition, for example, in a case where the transmission is prohibited (or non-permitted) in the OBSS R-TWT, scheduler 106 outputs that transmission is not performed in the OBSS R-TWT to data generator 107, data encoder 108, and data modulator 109.

In addition, the scheduler determines scheduling for transmitting low latency traffic in the BSS R-TWT, based on the BSS R-TWT information, and outputs the scheduling information to data generator 107, data encoder 108, data modulator 109, and preamble generator 110.

Data generator 107 generates a data sequence to be transmitted to another AP or STA 200 based on the scheduling information input from scheduler 106.

For example, the data sequence to be transmitted to another AP may include the BSS R-TWT information or a response signal to the received OBSS R-TWT information. In addition, for example, the data sequence to be transmitted to STA 200 may include the BSS R-TWT information, a Trigger frame signal requesting STA 200 to transmit low latency traffic, a low latency traffic signal addressed to STA 200, or a response signal to the low latency traffic from STA200. Data generator 107 outputs the data sequence to data encoder 108.

Data encoder 108 encodes the data sequence input from data generator 107 based on the scheduling information input from scheduler 106, and outputs the encoded data to data modulator 109.

Data modulator 109 performs modulation and inverse Fourier transform (IFFT) on the encoded data signal input from data encoder 108, based on the scheduling information input from scheduler 106, and outputs the modulated data signal to radio transmitter 111.

Preamble generator 110 generates a preamble signal based on the scheduling information input from scheduler 106. Preamble generator 110 performs modulation and IFFT processing on the preamble signal, and outputs the preamble signal to radio transmitter 111.

Radio transmitter 111 generates a radio frame (also referred to as packet signal) by adding the preamble signal input from preamble generator 110 to the modulated data signal input from data modulator 109. Radio transmitter 111 performs radio transmission processing on the radio frame, such as digital-to-analog (D/A) conversion and upconversion to a carrier frequency, and transmits the signal after the radio transmission processing to another AP or STA 200 via the antenna.

### [Configuration Example of STA 200]

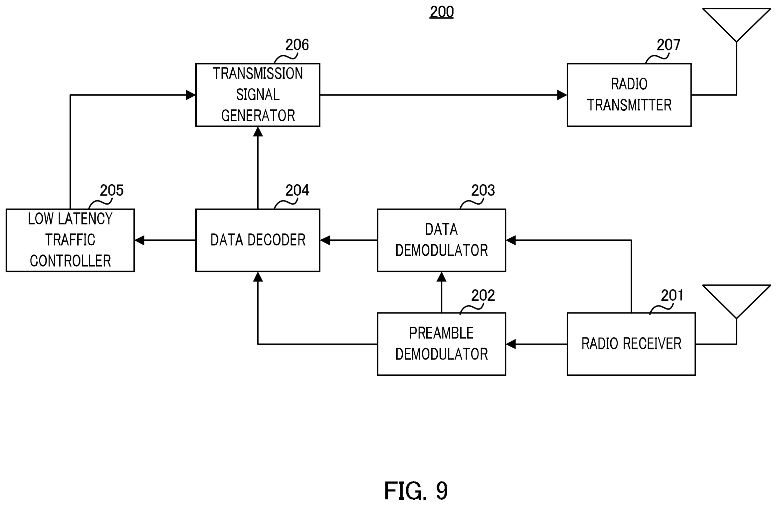

FIG. 9 is a block diagram illustrating a configuration example of STA 200 (for example, downlink radio reception apparatus).

STA 200 illustrated in FIG. 9 may include, for example, radio receiver 201, preamble demodulator 202, data demodulator 203, data decoder 204, low latency traffic controller 205, transmission signal generator 206, and radio transmitter 207.

At least one of preamble demodulator 202, data demodulator 203, data decoder 204, low latency traffic controller 205, and transmission signal generator 206 illustrated in FIG. 9 may be included in the controller illustrated in FIG. 5, and radio receiver 201 illustrated in FIG. 9 may be included in the receiver illustrated in FIG. 5.

In FIG. 9, radio receiver 201 receives a signal transmitted from AP 100 via the antenna. Radio receiver 201 performs radio reception processing on the received signal, such as downconversion and A/D conversion. Radio receiver 201 outputs a preamble signal extracted from the received signal after the radio reception processing to preamble demodulator 202, and outputs a data signal extracted from the received signal after the radio reception processing to data demodulator 203.

Preamble demodulator 202 performs FFT on the preamble signal input from radio receiver 201, and extracts reception control information (for example, BW, MCS, and error correction code) used for demodulation and decoding of the data signal (or the data portion). In addition, preamble demodulator 202 performs channel estimation based on a reference signal included in the preamble signal, and derives a channel estimation value. Preamble demodulator 202 outputs the reception control information to data demodulator 203 and data decoder 204, and outputs the channel estimation value to data demodulator 203.

Data demodulator 203 performs FFT on the data signal input from radio receiver 201, demodulates the data signal using the reception control information and the channel estimation value input from preamble demodulator 202, and outputs the demodulated data signal to data decoder 204.

Data decoder 204 decodes the demodulated data signal input from data demodulator 203 using the reception control information input from preamble demodulator 202. Data decoder 204 performs error determination on the decoded data signal using a method such as CRC, for example. In a case where there is no error in the decoded data signal, data decoder 204 outputs the decoded data signal to low latency traffic controller 205 and transmission signal generator 206.

Low latency traffic controller 205 holds BSS R-TWT information or OBSS R-TWT information included in the decoded data signal input from data decoder 204 in a buffer. In addition, low latency traffic controller 205 outputs the BSS R-TWT information and the OBSS R-TWT information to transmission signal generator 206.

Transmission signal generator 206 generates a data sequence to be transmitted to AP 100, based on the decoded data signal input from data decoder 204. For example, the data sequence to be transmitted to AP 100 may include a response signal (for example, referred to as Acknowledge (ACK) or Block ACK (BA)) to the signal received from AP 100.

In addition, transmission signal generator 206 generates the data sequence of the low latency traffic to be transmitted in the R-TWT SP in which low latency traffic can be transmitted, based on the BSS R-TWT information and the OBSS R-TWT information input from low latency traffic controller 205.

In addition, in a case where the decoded data signal input from data decoder 204 includes a Trigger frame requesting transmission of low latency traffic, transmission signal generator 206 generates a data sequence to be transmitted using a Trigger-based PHY protocol data unit (TB PPDU), based on the control information included in the Trigger frame.

Transmission signal generator 206 generates a data signal by encoding the generated data sequence, assigning the data sequence to a predetermined frequency resource, and performing modulation and IFFT processing. Transmission signal generator 206 generates a radio frame by adding the preamble signal to the data signal, and outputs the radio frame to radio transmitter 207.

Radio transmitter 207 performs radio transmission processing on the radio frame input from transmission signal generator 206, such as D/A conversion or upconversion to a carrier frequency, and transmits the signal after the radio transmission processing to AP 100 via the antenna.

The configuration examples of AP 100 and STA 200 have been described above.

As described above, in the present embodiment, AP 100 transmits the R-TWT information to the OBSS AP/STA by including the R-TWT information in the Management frame. This enables sharing of the R-TWT information of each BSS between a plurality of BSSs, which makes it possible for the AP/STA in each BSS to appropriately control transmission or reception based on the R-TWT information of the OBSS. Thus, according to the present embodiment, by controlling whether overlapping transmission is permitted in the R-TWT SP of each BSS, interference to low latency traffic can be reduced, and simultaneous transmission by a plurality of BSSs can be performed.

Therefore, according to the present embodiment, the efficiency of transmission control in radio communication can be improved.

### (Embodiment 2)

In the present embodiment, AP 100 transmits R-TWT information to OBSS AP.

In the following, as an example, a method will be described in which AP 100 transmits R-TWT information to OBSS AP, and the OBSS AP indicates the R-TWT information to OBSS STA to transmit and receive a signal with low latency traffic in the R-TWT SP.

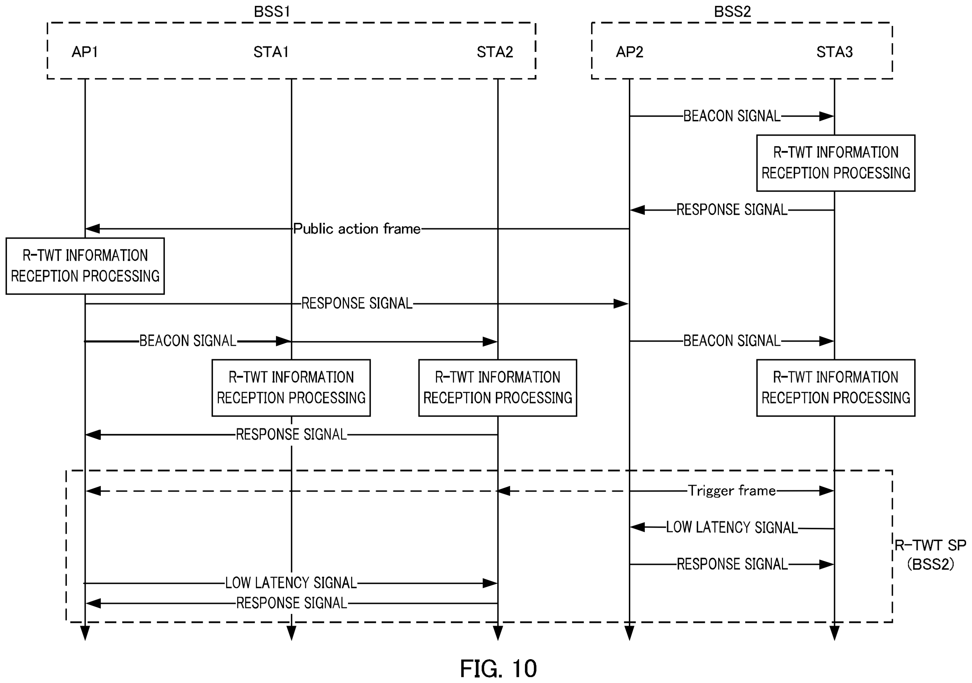

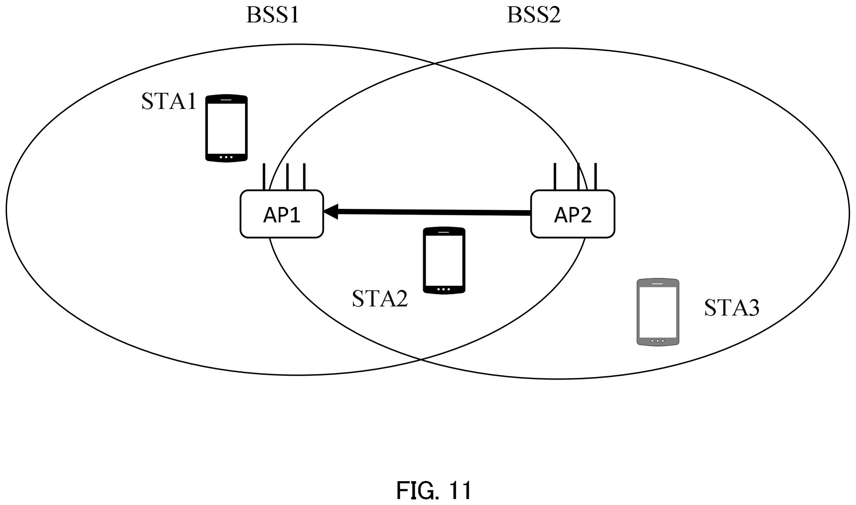

FIG. 10 is a sequence diagram illustrating an operation example of AP 100 (for example, AP 1 and AP 2) and STA 200 (for example, STA 1, STA 2, and STA 3) according to the present embodiment. In the present embodiment, for example, as illustrated in FIG. 11, BSS 1 is constituted by AP 1, STA 1, and STA 2, and BSS 2 is constituted by AP 2 and STA 3.

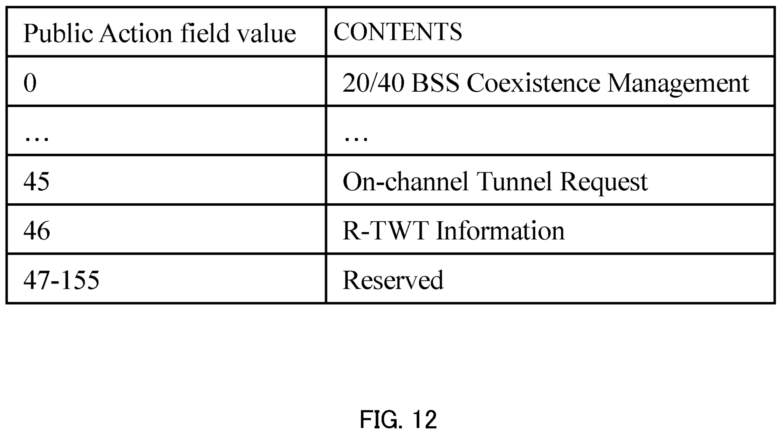

The R-TWT information is included in a frame (for example, Public action frame) transmitted by AP and is shared. FIG. 12 illustrates an example of a type of the Public action frame. As illustrated in FIG. 12, R-TWT information may be defined as a type of the Public action frame.

In the example of FIG. 10, AP 2 transmits a Beacon signal including the R-TWT information to STA 3 served by AP 2. STA 3 that has received the R-TWT information transmits a response signal to AP 2. The indication of the R-TWT information from AP 1 to AP 2 by a Beacon signal may be performed periodically or non-periodically.

In addition, in the example of FIG. 10, AP 2 transmits a Public action frame including the R-TWT information to AP 1. AP 1 that has received the Public action frame performs reception processing on the R-TWT information included in the Public action frame. For example, AP 1 stores, in a buffer, the start period of the R-TWT SP of BSS 2, the period length, the type of the R-TWT, the link type or the traffic type treated as low latency traffic, and the like, which are included in the R-TWT information, and transmits a response signal to AP 2.

In addition, AP 1 transmits a Beacon signal including the R-TWT information received from AP 2, to STA 1 and STA 2 served by AP 1. STA 1 and STA 2 perform reception processing on the R-TWT information included in the Beacon signal, and transmit response signals to AP 1.

When the R-TWT SP of BSS 2 is started, low latency traffic is transmitted and received according to the R-TWT type indicated by the R-TWT information. For example,

FIG. 10 illustrates an example in which the R-TWT type is Trigger-enable R-TWT. In this case, in the R-TWT SP, AP 2 first transmits a Trigger frame to STA 3 served by AP 2 and requests transmission of a low latency signal. Note that AP 2 may transmit a low latency signal to STA 3 in the R-TWT SP (not illustrated).

STA 3 that has received the Trigger frame transmits a low latency signal to AP 2 based on the scheduling information included in the Trigger frame. AP 2 that has received the low latency signal transmits a response signal to STA3.

In addition, as illustrated in FIG. 10, AP 1, STA 1, and STA2 of BSS 1 (for example, OBSS AP/STA for AP 2) perform carrier sensing after confirming the transmission of the Trigger frame by AP 2, and in a case where the channel to be used for transmission is in an idle state, transmit low latency traffic. For example, in FIG. 10, AP 1 transmits a low latency signal to STA 2, and STA 2 that has received the low latency signal transmits a response signal to AP 1.

Note that the destination of the Public action frame in which AP 100 include the R-TWT information is not limited to a single AP, and may be an identifier of a group indicating a plurality of APs. For example, a coordinated group ID indicating a plurality of APs belonging to a group (for example, coordinated group, virtual BSS, or AP candidate set) that performs Multi-AP coordinated transmission by the plurality of APs may be used as the destination of the Public action frame.

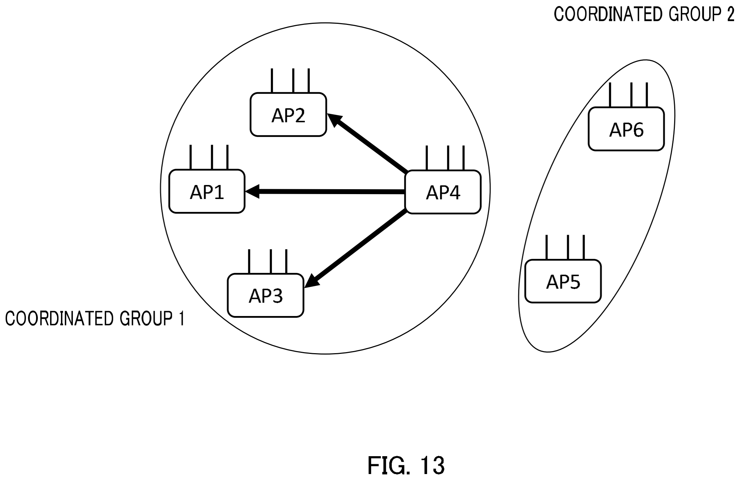

FIG. 13 illustrates a communication example in a case where R-TWT information is included in a Public action frame, and the R-TWT information is shared to APs belonging to a common coordinated group. In FIG. 13, AP 4 transmits a Public action frame including R-TWT information to a plurality of APs (for example, AP 1, AP 2, and AP 3) belonging to coordinated group 1 including AP 4. AP 1, AP 2, and AP 3 belonging to coordinated group 1 receive the Public action frame transmitted by AP 4 and acquire the R-TWT information. Meanwhile, AP 5 and AP 6 belonging to coordinated group 2 to which AP 4 does not belong do not receive the Public action frame including the R-TWT information.

In addition, the R-TWT information may be indicated to another AP by using a Management frame. For example, in a case where AP 100 newly joins a coordinated group, AP 100 may include the R-TWT information of the newly joining AP 100 in Beacon, Probe request, or Association request to be transmitted to another AP belonging to the coordinated group to indicate the information. In addition, for example, AP 100 belonging to the coordinated group may include R-TWT information in Beacon, Probe response, or Association response to be transmitted to the AP that newly joins the coordinated group, and indicate the information.

In addition, AP 100 may indicate information on an offset value indicating a difference in transmission timing (for example, timing synchronization function (TFS)) between the BSS to which AP 100 belongs and the OBSS, together with the R-TWT information. The offset value can be derived by acquiring the TSF of the OBSS from the Beacon signal transmitted by the OBSS AP in advance and comparing the TSF of the OBSS with the TSF of the BSS to which the AP belongs.

As described above, AP 100 transmits the R-TWT information to the OBSS AP by using the Public action frame, and transmits (or relays) the R-TWT information to STA 200 served by AP 100 by using the Management frame, so that the R-TWT information is shared between different BSSs, and thus transmission control in consideration of the R-TWT of the OBSS can be performed. For example, AP 100 and STA 200 may end the TXOP before the start of the R-TWT of OBSS and may transmit a signal after the start of the R-TWT of the OBSS depending on the carrier sense result. As a result, interference to the low latency traffic transmitted by the AP/STA of the OBSS from the signal transmitted from AP 100 and STA 200 can be suppressed.

### [Configuration Example of AP 100]

The configuration of AP 100 according to the present embodiment may be the same as the configuration of Embodiment 1 (for example, FIG. 8). In AP 100 according to the present embodiment, the operations of low latency traffic controller 105, scheduler 106, and data generator 107 are different from those in Embodiment 1.

Low latency traffic controller 105 outputs, to scheduler 106, information for AP 100 and STA 200 of the BSS to transmit low latency traffic with priority in the OBSS R-TWT (hereinafter, referred to as "R-TWT information"), based on the R-TWT information of the AP (for example, OBSS AP) and the STA (for example, OBSS STA) of the OBSS included in the decoded data signal input from data decoder 104. Note that the R-TWT information may be distinguished between the BSS R-TWT information and the OBSS R-TWT information, or the BSS R-TWT information may be defined as a copy of the OBSS R-TWT information.

Scheduler 106 determines transmission scheduling for at least one of the BSS R-TWT and the OBSS R-TWT based on the R-TWT information input from low latency traffic controller 105. Scheduler 106 determines STA 200 that can perform transmission in the BSS R-TWT and the OBSS R-TWT and determines the scheduling information of the R-TWT information for STA 200 to transmit low latency traffic. Scheduler 106 outputs the determined scheduling information to data generator 107, data encoder 108, data modulator 109, and preamble generator 110. In addition, scheduler 106 outputs the scheduling information for AP 100 to transmit low latency traffic in the OBSS R-TWT and the BSS R-TWT, to data generator 107, data encoder 108, data modulator 109, and preamble generator 110.

Data generator 107 generates a data sequence to be transmitted to another AP or STA 200 based on the scheduling information input from scheduler 106. For example, the data sequence to be transmitted to another AP may include R-TWT information and a response signal to the R-TWT information received from the OBSS AP. In addition, for example, the data sequence to be transmitted to STA 200 may include R-TWT information, a Trigger frame signal for requesting STA 200 to transmit low latency traffic, a low latency traffic signal addressed to STA 200, or a response signal to the low latency traffic from STA 200. Data generator 107 outputs the data sequence to data encoder 108.

### [Configuration Example of STA 200]

The configuration of STA 200 according to the present embodiment may be the same as the configuration of Embodiment 1 (for example, FIG. 9). In STA 200 according to the present embodiment, the operations of low latency traffic controller 205 and transmission signal generator 206 are different from those in Embodiment 1.

Low latency traffic controller 205 holds the R-TWT information included in the decoded data signal input from data decoder 204 in a buffer. In addition, low latency traffic controller 205 outputs the R-TWT information to transmission signal generator 206.

Transmission signal generator 206 generates a data sequence to be transmitted to AP 100, based on the decoded data signal input from data decoder 204. For example, the data sequence to be transmitted to AP 100 may include a response signal to the signal received from AP 100.

In addition, transmission signal generator 206 generates the data sequence of the low latency traffic to be transmitted in the R-TWT SP in which low latency traffic can be transmitted, based on the R-TWT information input from low latency traffic controller 205.

In addition, in a case where the decoded data signal input from data decoder 204 includes a Trigger frame requesting transmission of low latency traffic, transmission signal generator 206 generates a data sequence to be transmitted using TB PPDU, based on the control information included in the Trigger frame.

Transmission signal generator 206 generates a data signal by encoding the generated data sequence, assigning the data sequence to a predetermined frequency resource, and performing modulation and IFFT processing. Transmission signal generator 206 generates a radio frame by adding the preamble signal to the data signal, and outputs the radio frame to radio transmitter 207.

The configuration examples of AP 100 and STA 200 have been described above.

As described above, in the present embodiment, AP 100 transmits the R-TWT information to the OBSS AP by including the R-TWT information in the Public action frame. This enables sharing of the R-TWT information of each BSS between a plurality of BSSs, which makes it possible for the AP/STA in each BSS to appropriately control transmission or reception based on the R-TWT information of the OBSS. Thus, according to the present embodiment, by controlling whether overlapping transmission is permitted in the R-TWT SP of each BSS, interference to low latency traffic can be reduced, and simultaneous transmission by a plurality of BSSs can be performed.

Therefore, according to the present embodiment, the efficiency of transmission control in radio communication can be improved.

Next, transmission control methods related to R-TWT in Embodiment 1 or Embodiment 2 described above will be described.

### (Method 1)

In Method 1, AP 100 indicates, to AP/STA, overlap permission information related to the priority transmission period of low latency traffic (for example, R-TWT SP).

The overlap permission information indicates, for example, whether a plurality of BSSs can perform transmission control by sharing the same time resource. For example, AP 100 may indicate, to OBSS AP/STA, overlap permission information related to whether to permit the overlap of the R-TWT SP of the OBSS with the R-TWT SP of the BSS to which AP 100 belongs. For example, the overlap permission information may be determined based on an interference gain between APs and information on the interference from the OBSS AP/STA included in the measurement report indicated from the STA.

In the following, examples of an indication signal of the overlap permission information (indication signal examples 1 to 3) will be described.

### <Indication Signal Example 1>

In the indication signal example 1, the overlap permission information is indicated using bit information (for example, transmission permission bit) indicating either permission or prohibition (or non-permission) of overlap.

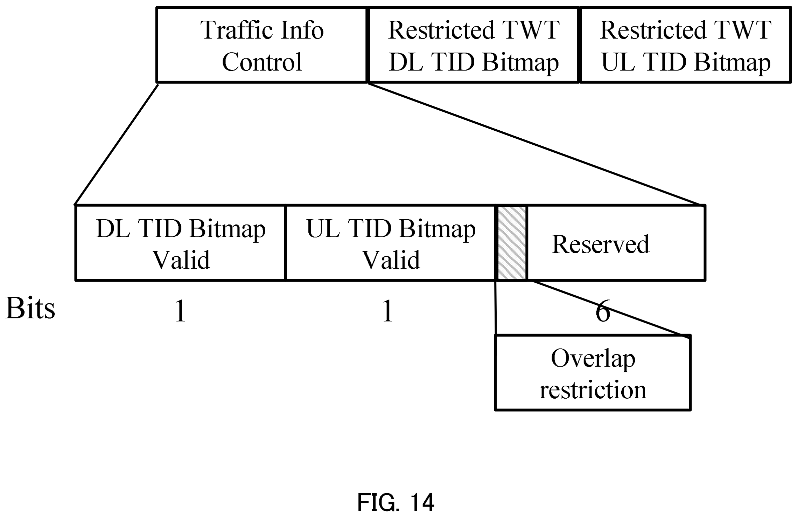

For example, the overlap permission information may be indicated in an "Overlap restriction subfield" included in the Restricted TWT Traffic info of the TWT element illustrated in FIG. 14.

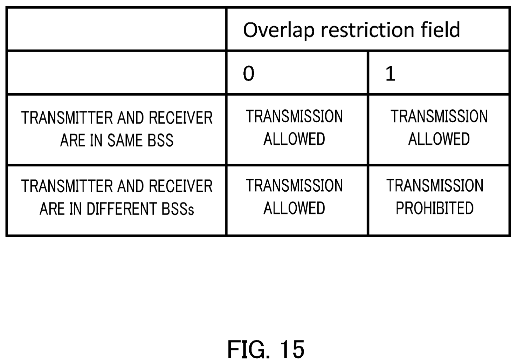

For example, in a case where the Overlap restriction subfield is included in the TWT element indicated from the OBSS AP to the OBSS STA and the BSS AP/STA (for example, Embodiment 1), the indication information may be interpreted differently depending on the BSS types of the transmitter and the receiver as illustrated in FIG. 15. For example, as illustrated in FIG. 15, for the transmitter and the receiver in the same BSS, it may be configured that transmission is allowed (for example, overlap is allowed) regardless of the value of the Overlap restriction subfield, and for the transmitter and the receiver in different BSSs, it may be configured that transmission is allowed or prohibited (or non-permitted) depending on the value of the Overlap restriction subfield.

In addition, for example, in a case where the Overlap restriction subfield is included in the TWT element indicated from the BSS AP to the BSS STA (for example, Embodiment 2), overlapping transmission availability may be indicated by setting the Overlap restriction subfield to 0, and overlapping transmission prohibition (non-permission) may be indicated by setting the Overlap restriction subfield to 1.

### <Indication Signal Example 2>

In the indication signal example 2, the overlap permission information is indicated using information (for example, member information of R-TWT) related to the participation of AP and STA in the R-TWT in which transmission of low latency traffic is performed.

For example, in a case where AP 100 or STA 200 receives the R-TWT information for which the TWT element transmitted from the BSS AP or the OBSS AP has Negotiation Type = 3 (for example, referred to as "TWT response"), AP 100 or STA 200 determines that AP 100 or STA 200 joins as a member of the R-TWT and determines that overlapping transmission is allowed.

On the other hand, in a case where the TWT response is not indicated to AP 100 or STA 200 from the BSS AP or the OBSS AP, AP 100 or STA 200 determines to be a non-member of the R-TWT and determines that overlapping transmission is not performed.

### <Indication Signal Example 3>

In the indication signal example 3, the overlap permission information is indicated by transmission suspension information.

The transmission suspension information is indicated by, for example, a Quiet element. The Quiet element may indicate a period including a start timing of the R-TWT SP. For example, the transmission suspension period indicated by the Quiet element may be indicated in units of a beacon transmission interval (Time Unit (TU)).

When AP 100 or STA 200 receives the Quiet element, AP 100 or STA 200 determines that overlapping transmission is prohibited (or non-permitted) in the period indicated by the Quiet element.

On the other hand, when the Quiet element is not indicated or in a period different from the period indicated by the Quiet element, AP 100 or STA 200 determines that overlapping transmission is allowed.

The indication signal examples of the overlap permission information have been described above.

Next, an operation example of R-TWT in the case where overlapping transmission availability or overlapping transmission prohibition (or non-permission) is indicated by the overlap permission information will be described.

For example, AP 100 receives R-TWT information including overlap permission information from OBSS AP.

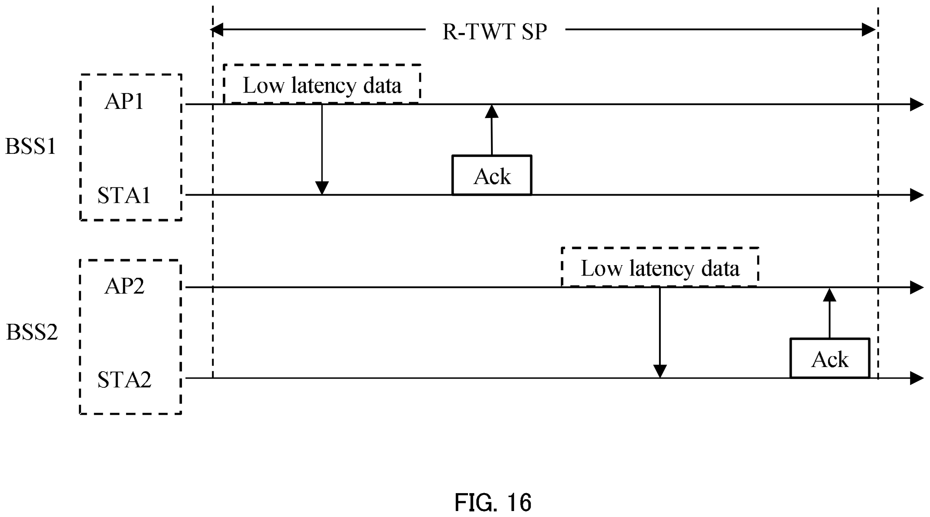

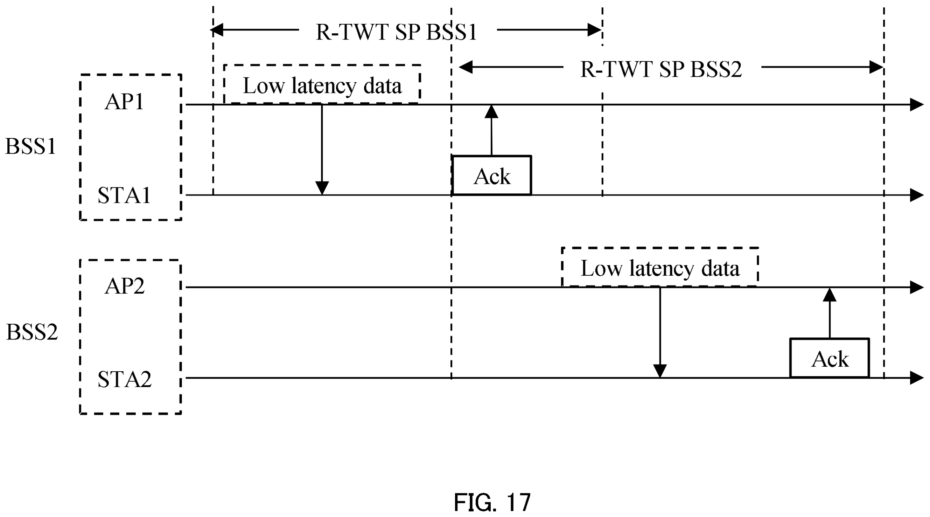

In a case where it is indicated that overlapping transmission is allowed, AP 100 may determine the R-TWT SP of which the transmission period matches the OBSS R-TWT SP indicated by the R-TWT information of the OBSS AP, as illustrated in FIG. 16. Alternatively, in a case where it is indicated that overlapping transmission is allowed, AP 100 may determine the R-TWT SP of which a part of the transmission period overlaps with the OBSS R-TWT SP, as illustrated in FIG. 17. AP 100 indicates the determined R-TWT SP to the STA served by AP 100. The APs/STAs of the BSS and the OBSS transmit and receive low latency traffic in the R-TWT SP indicated by the R-TWT information. In the period in which the R-TWT SPs of a plurality of BSSs match (overlap), the traffic with low latency traffic type specified by the R-TWT information of each BSS is prioritized. Alternatively, in the period in which the R-TWT SPs of a plurality of BSSs match (overlap), the traffic with low latency traffic type that is permitted by the R-TWT information of each BSS may be transmittable, and the traffic with low latency traffic type that is not permitted may be non-transmittable.

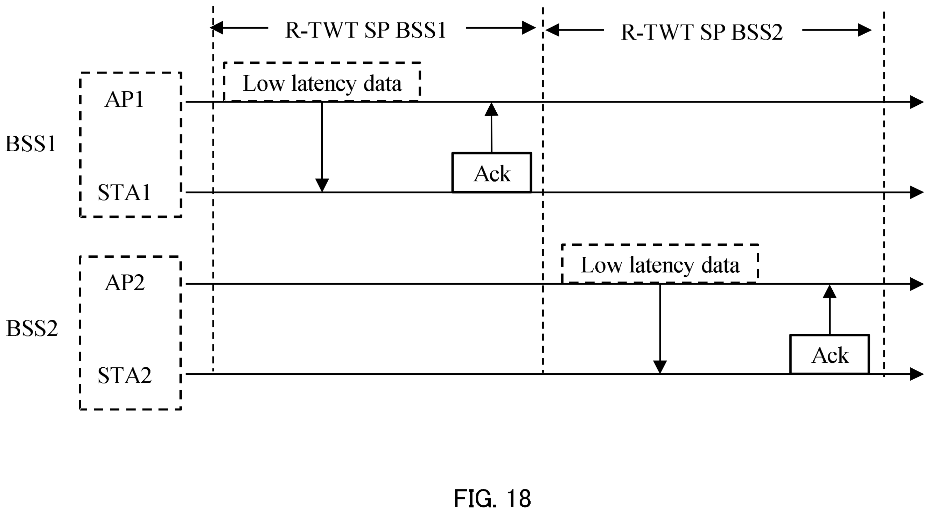

On the other hand, in a case where it is indicated that overlapping transmission is prohibited (or non-permitted), AP 100 determines the R-TWT SP of the BSS such that the transmission period does not overlap with the OBSS R-TWT SP, as illustrated in FIG. 18, and indicates the R-TWT SP to the STA served by AP 100. The AP/STA transmits low latency traffic in the R-TWT SP of the BSS to which the AP/STA belongs. The AP/STA does not perform transmission in the period of the R-TWT SP of the OBSS.

As described above, in Method 1, AP 100 indicates, to another AP and STA 200, the overlap permission information of the R-TWT SP of the low latency traffic. For example, by prohibiting (or non-permitting) a plurality of BSSs from transmitting in the same time resource, interference to a low latency traffic signal from the signal of OBSS can be suppressed. In addition, for example, by permitting a plurality of BSSs to transmit in the same time resource, simultaneous transmission of low latency traffic signals in the plurality of BSSs can be performed.

### (Method 2)

In Method 2, the R-TWT information addressed to AP 100 includes overlap permission information related to Multi-AP coordinated transmission.

For example, AP 100 indicates, in the Traffic Info Control field of the TWT element, overlap permission information related to Multi-AP coordinated transmission (hereinafter, referred to as "Multi-AP overlap permission information") in the R-TWT SP. For example, AP 100 transmits Multi-AP overlap permission information related to whether to permit coordinated transmission by a plurality of APs in the R-TWT SP of the BSS to which AP 100 belongs.

The Multi-AP overlap permission information may indicate, for example, whether the OBSS AP that has received R-TWT information may perform Multi-AP coordinated transmission in the R-TWT SP indicated by the R-TWT information (for example, whether to permit Multi-AP coordinated transmission by the OBSS AP). For example, the method (or the type) of the Multi-AP coordinated transmission may be indicated by a "Multi-AP bitmap." For example, in a case where it is indicated, by the Multi-AP overlap permission information, that the OBSS AP that has received the R-TWT information may perform Multi-AP coordinated transmission (in a case where Multi-AP coordinated transmission is permitted), the OBSS AP transmits a Trigger frame for starting the Multi-AP coordinated transmission in the SP time period specified in the received R-TWT information.

Alternatively, the Multi-AP overlap permission information may indicate that the transmission source AP of the R-TWT information may use a Multi-AP coordination method indicated by the Multi-AP bitmap (for example, whether Multi-AP coordinated transmission is performed by the transmission source AP). For example, in a case where Multi-AP coordinated transmission is permitted by the Multi-AP overlap permission information, the transmission source AP of the R-TWT information transmits a Trigger frame for starting Multi-AP coordinated transmission in the SP time period specified by including the time information in the R-TWT information.

Alternatively, the Multi-AP overlap permission information may indicate that both the transmission source AP and the reception AP of the R-TWT information may transmit Trigger frames for starting Multi-AP coordinated transmission (for example, whether to permit Multi-AP coordinated transmission by the APs of both the BSS and the OBSS).

For example, the Multi-AP overlap permission information is indicated using information (for example, Multi-AP bitmap) in a bitmap format in which the Multi-AP coordinated transmission and each bit are associated with each other. Each bit of the Multi-AP bitmap indicates whether overlapping transmission is allowed for the corresponding Multi-AP coordination method. For example, when the bit of the Multi-AP bitmap = 0, it is indicated that overlapping transmission is allowed (or permitted) for the corresponding Multi-AP coordination method. In addition, when the bit of the Multi-AP bitmap = 1, it is indicated that overlapping transmission is prohibited (or non-permitted) for the corresponding Multi-AP coordination method.

Examples of the Multi-AP coordination method include Joint Transmission (JT), Coordinated Beamforming (C-BF), Coordinated OFDMA (C-OFDMA), Coordinated TDMA (C-TDMA), Coordinated Spatial Reuse (C-SR), and Coordinated Multiple Input Multiple Output (C-MIMO).

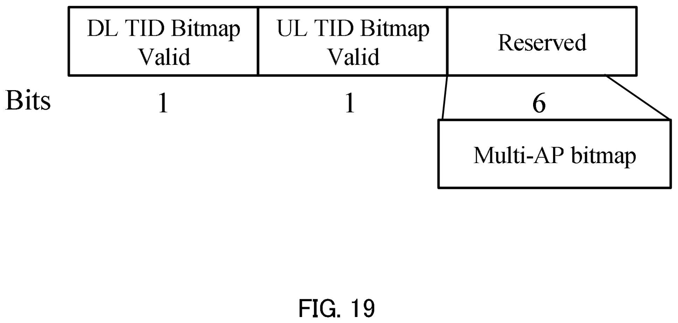

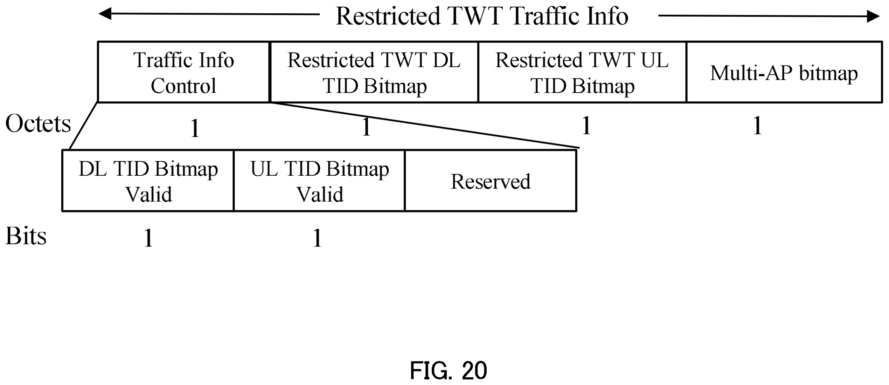

For example, as illustrated in FIG. 19, the Multi-AP bitmap may be indicated in the Traffic Info Control of the TWT element. In addition, as illustrated in FIG. 20, the Multi-AP bitmap may be indicated in the Restricted TWT Traffic Info of the TWT element.

Alternatively, the Multi-AP overlap permission information may indicate a single Multi-AP coordination method identifier (for example, Multi-AP type) that is information indicating any of a plurality of methods for the Multi-AP coordinated transmission.

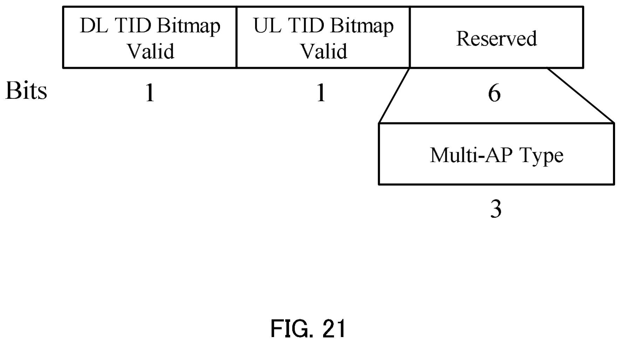

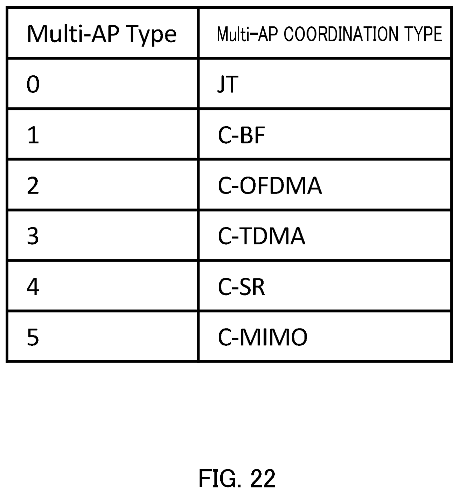

For example, as illustrated in FIG. 21, the Multi-AP type may be indicated in the Traffic Info Control of the TWT element. In addition, for example, as illustrated in FIG. 22, the Multi-AP type may indicate a Multi-AP coordination method for which overlapping transmission is allowed in the R-TWT SP.

According to Method 2, by indicating the Multi-AP overlap permission information using the R-TWT information addressed to another AP (for example, OBSS AP), AP 100 can simultaneously indicate the type of the traffic that can be transmitted using the Multi-AP coordination method in the R-TWT SP.

Hereinafter, methods for indicating the R-TWT information (for example, including Multi-AP overlap permission information) in Method 2 will be described.

### <Method 2-1>

In Method 2-1, the R-TWT information indicates the condition for which overlapping transmission in Coordinated Spatial Reuse (C-SR) is allowed.

(1) For example, the R-TWT information may indicate a link type for which overlapping transmission of a C-SR signal is allowed.

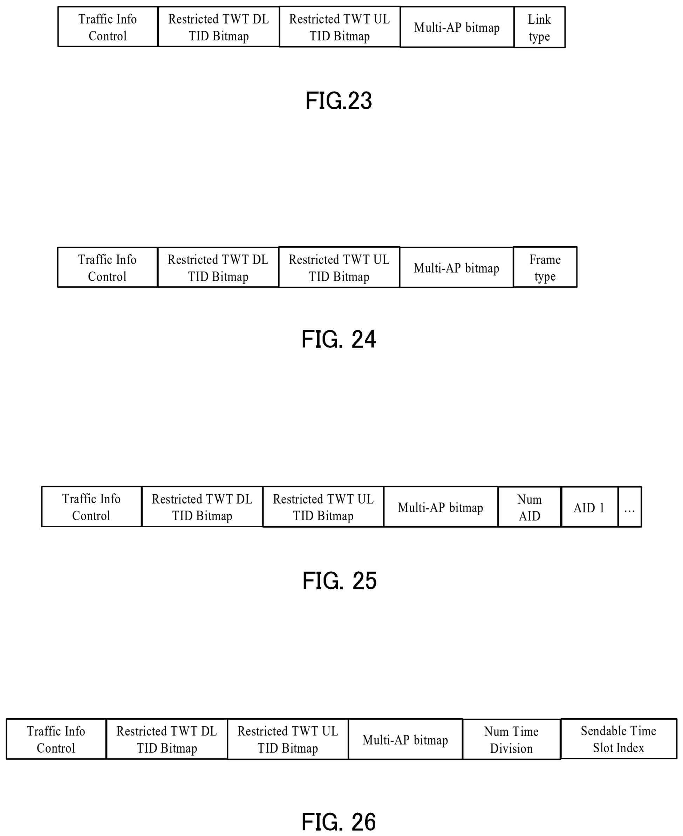

For example, as illustrated in FIG. 23, the link type for which overlapping transmission of a C-SR signal is allowed may be indicated in a "Link type subfield" in the Restricted TWT Traffic Info of the TWT element. For example, in a case where the Link type subfield = 0, it is indicated that overlapping transmission of a C-SR signal is allowed in both the DL and the UL. In a case where the Link type subfield = 1, it is indicated that overlapping transmission of a C-SR signal is allowed in the DL and overlapping transmission of a C-SR signal is prohibited (or non-permitted) in the UL. In a case where the Link type subfield = 2, it is indicated that overlapping transmission of a C-SR signal is allowed in the UL and overlapping transmission of a C-SR signal is prohibited (or non-permitted) in the DL.

(2) For example, the R-TWT information may indicate a frame type for which overlapping transmission of a C-SR signal is allowed.

For example, as illustrated in FIG. 24, the frame type for which overlapping transmission of a C-SR signal is allowed may be indicated in a "Frame type subfield" in the Restricted TWT Traffic Info of the TWT element. For example, it is indicated that overlapping transmission of a C-SR signal is allowed for all frame types when the Frame Type subfield = 0, for Single User (SU) PPDU when the Frame Type subfield = 1, for Multi User (MU) PPDU when the Frame Type subfield = 2, and for TB PPDU when the Frame Type subfield = 3.

In addition, for example, it may be indicated that overlapping transmission of a C-SR signal is allowed for all frame types when the Frame type subfield = 0, for UHR PPDU when the Frame type subfield = 1, for pre-UHR PPDU when the Frame type subfield = 2, and for pre-EHT PPDU when the Frame type subfield = 3.

Note that the association between the value of the Frame type subfield and the frame type is not limited to the above example, and may be other associations.

(3) For example, the R-TWT information may indicate an association identifier (AID) of a transmission destination or source STA/AP for which overlapping transmission by C-SR is allowed.

For example, as illustrated in FIG. 25, the AID of the STA/AP for which overlapping transmission of a C-SR signal is allowed may be indicated in a "Number of AID subfield" and an "AID subfield" of the Restricted TWT Traffic Info of the TWT element. For example, the Number of AID subfield indicates the number of AID subfields indicating the AIDs of the STAs/APs for which overlapping transmission of a C-SR signal is allowed. In addition, for example, each AID subfield indicates the AID of the AP/STA for which overlapping transmission of a C-SR signal is allowed. The AID indicated in the AID subfield may be, for example, the AID of the STA having small interference from the OBSS AP/STA (for example, STA having an interference level equal to or less than a threshold value).

(4) For example, the R-TWT information may indicate a timing at which overlapping transmission of a C-SR signal is allowed.

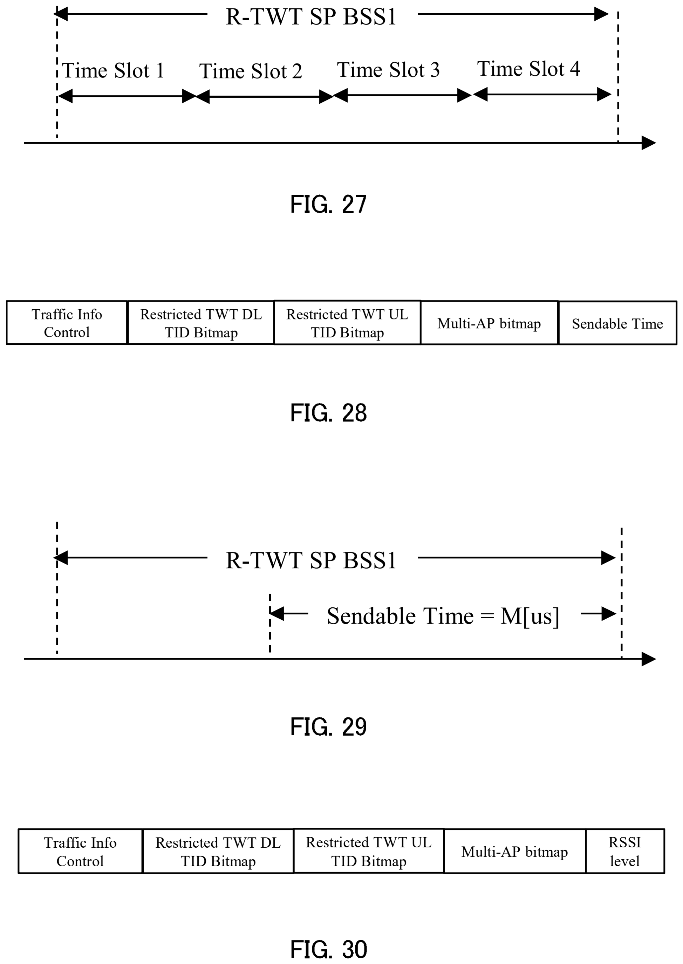

For example, as illustrated in FIG. 26, the timing at which overlapping transmission of a C-SR signal is allowed may be indicated in a "Number of Time division subfield (Num Time Division subfield)" and a "Sendable Time Slot subfield" of the Restricted TWT Traffic Info of the TWT element. The Number of Time division subfield indicates, for example, the number of time slots obtained by dividing the R-TWT SP into equal parts. In addition, the Sendable Time Slot subfield indicates a time slot number for which overlapping transmission of a C-SR signal is allowed among the time slots obtained by dividing the R-TWT SP into equal parts. As an example, FIG. 27 illustrates an example of a case where the R-TWT SP is divided into four time slots. Note that the number of time slot divisions in the R-TWT SP is not limited to four, and may be another number of divisions.

In addition, for example, as illustrated in FIG. 28, a time duration in which overlapping transmission of a C-SR signal is allowed may be indicated in a "Sendable Time subfield" of the Restricted TWT Traffic Info of the TWT element. The Sendable Time subfield indicates, for example, a time duration M [us]. For example, as illustrated in FIG. 29, the Sendable Time subfield may indicate that overlapping transmission of a C-SR signal is allowed in a period of remaining M [us] of the R-TWT SP.

(5) For example, the R-TWT information may indicate an interference level at which overlapping transmission of a C-SR signal is allowed.

For example, as illustrated in FIG. 30, the interference level at which overlapping transmission of a C-SR signal is allowed may be indicated in a "Received Signal Strength Indicator (RSSI) level subfield" of the Restricted TWT Traffic Info of the TWT element. For example, the RSSI level subfield may indicate the sum of the transmission power and the allowable interference power of the transmission source AP of the R-TWT information (parameterized spatial reuse (PSR)) or a packet detection level (packet detection (PD)). In addition, the RSSI level subfield may indicate, for example, the interference level to the transmission source AP of the R-TWT information.

In addition, for example, the R-TWT information may indicate the interference level given to a specific STA by combining the interference level at which overlapping transmission of a C-SR signal is allowed and the AID.

(6) For example, the R-TWT information may indicate a signal type (for example, TID) for which overlapping transmission of a C-SR signal is allowed.

For example, in a case where the bit corresponding to the C-SR in the Multi-AP bitmap = 0, it may be indicated that overlapping transmission of a C-SR signal including the TID for which the DL TID bitmap (for example, Restricted TWT DL TID Bitmap subfield) or the UL TID bitmap (for example, Restricted TWT UL TID Bitmap subfield) is 1 is allowed. This enables AP 100 to simultaneously transmit low latency traffic by C-SR without waiting for the transmission of low latency traffic of another BSS.

In addition, for example, in a case where the bit corresponding to the C-SR in the Multi-AP bitmap is 0, it may be indicated that overlapping transmission of a C-SR signal is allowed for the signal including the TID for which the DL TID bitmap or the UL TID bitmap is 0. This enables AP 100 to reduce interference to low latency traffic by prohibiting (or non-permitting) C-SR transmission for low latency traffic, and to perform simultaneous transmission by C-SR for non-low latency traffic.

As described above, according to Method 2-1, by indicating, using the R-TWT information, the condition for which overlapping transmission of a C-SR is allowed, the throughput can be improved by simultaneous transmission by C-SR while avoiding interference to low latency traffic.

### <Method 2-2>

In Method 2-2, the R-TWT information is included in information related to Multi-AP coordinated transmission (for example, Multi-AP information) and indicated. The information includes shared information (for example, Common Info) common to a plurality of APs and AP specific information (AP info) specific to each of the plurality of APs.

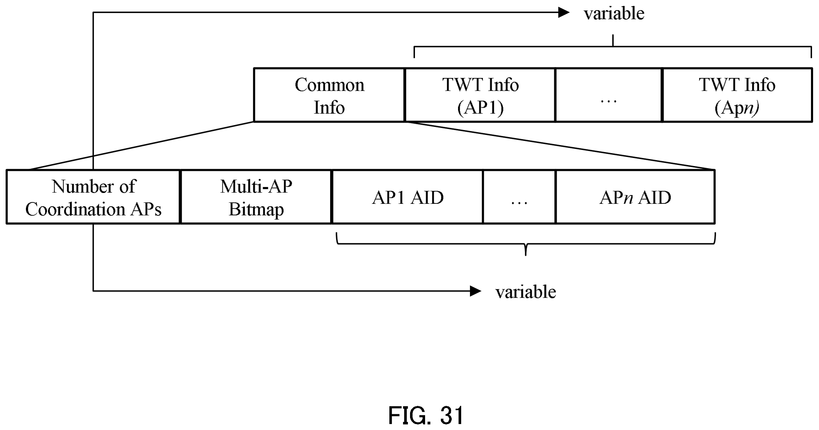

The Multi-AP information may be, for example, a Multi-AP element as illustrated in FIG. 31 and may be included in Beacon or the like to be indicated.

The Common Info of the Multi-AP element may include, for example, information related to coordination APs. The information related to coordination APs may include, for example, the number of coordination APs (for example, "Number of Coordination APs subfield"), information indicating a coordination mode (for example, "Multi-AP Bitmap subfield"), and identification information of each AP (for example, "AP AID subfield (AP1 AID, ..., APn AID)," BSS color, BSSID, and the like). These subfields are exemplarily included in a field (Common Info field), but the present disclosure is not limited thereto, and each subfield may be included in the Multi-AP element as a field (for example, a Number of Coordination APs field).

The number of coordination APs indicated by the Number of Coordination APs subfield may indicate the number of AP info entries included in the Multi-AP element (for example, the number of AP AID subfields included in the Common info).

In addition, the AP AID subfield indicates the destination information of the AP for each TWT Info included in the AP Info. For example, the order of the plurality of AP AID subfields included in the Common Info may be equal to the order of a plurality of TWT Info entries included in the AP info.

The AP Info of the Multi-AP element includes R-TWT information (for example, TWT Info) for each AP. Each TWT Info includes, for example, AP-specific Multi-AP overlap permission information. Each TWT Info field may include fields and subfields (for example, see FIG. 20) included in the TWT element. In addition, for example, the overlap permission information in Multi-AP coordinated communication may be indicated depending on the presence or absence of the AP AID included in the Multi-AP information (Multi-AP element). For example, AP 100 that has received the Multi-AP element may determine that AP 100 can participate in the Multi-AP coordinated transmission when the AP AID for AP 100 is included in the Multi-AP element. On the other hand, for example, AP 100 that has received the Multi-AP element may determine that AP 100 is prohibited from (or non-permitted) participating in the Multi-AP coordinated transmission when the AP AID for AP 100 is not included in the Multi-AP element.

As described above, according to Method 2-2, by including the R-TWT information in the Multi-AP element and indicating the R-TWT information, the information on the Multi-AP coordination method for which transmission is allowed during the R-TWT SP and the AP that can perform coordinated transmission can be collectively indicated.

### <Method 2-3>

In Method 2-3, the R-TWT information includes overlap permission information for C-OFDMA (for example, frequency resource information).

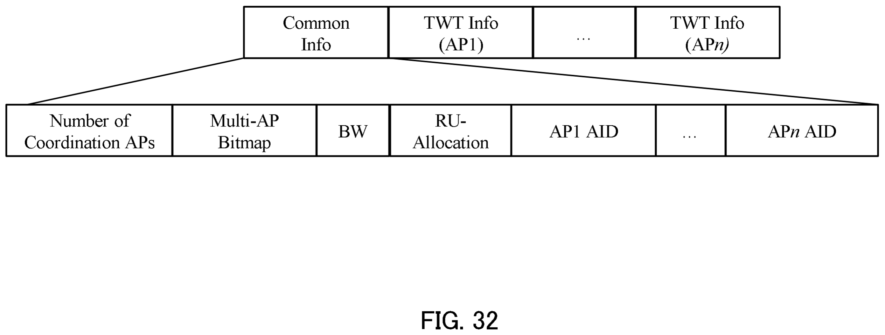

For example, in the Multi-AP element, Multi-AP bitmap may indicate that overlapping transmission is allowed for C-OFDMA, and may indicate, in the Common Info, full-bandwidth information (for example, BW subfield) common to the coordination APs and frequency resource allocation information (RU Allocation subfield) as illustrated in FIG. 32.

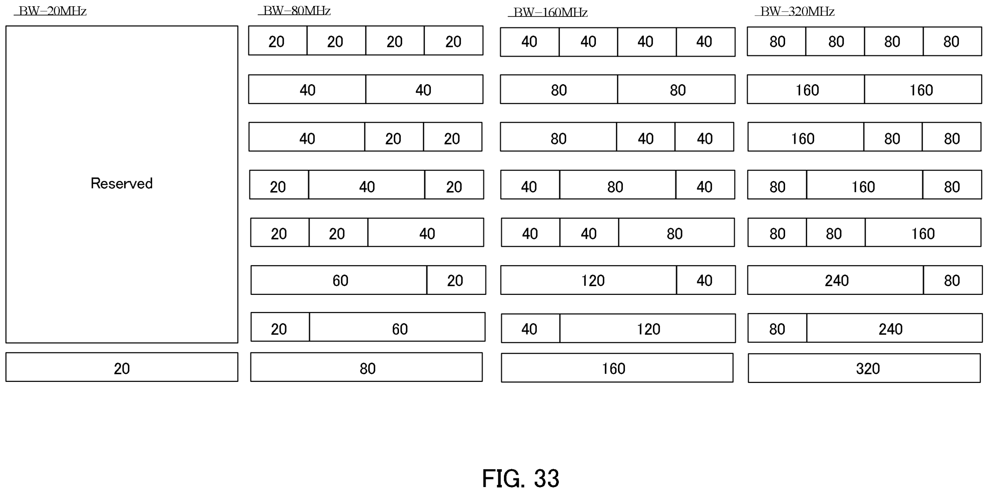

For example, the RU Allocation subfield of the Common Info included in the Multi-AP element indicates frequency resource information as illustrated in FIG. 33. For example, in FIG. 33, the maximum number of coordination APs that can be indicated by the RU Allocation is set to four, and the frequency resource of eight patterns (for example, 3 bits) is indicated by the RU Allocation subfield in combination with the bandwidth (for example, BW = 20 MHz, 80 MHz, 160 MHz, or 320 MHz) for C-OFDMA indicated by the BW subfield.

For example, in a case where the number of frequency resources indicated by the RU Allocation subfield is one, one RU is used by a plurality of APs (for example, non-C-OFDMA). In addition, for example, in a case where the number of frequency resources indicated by the RU Allocation subfield is two or more, the RU used by each AP may be assigned in the order of the AP AIDs indicated by the same Multi-AP element (for example, one RU may be assigned to one AP).

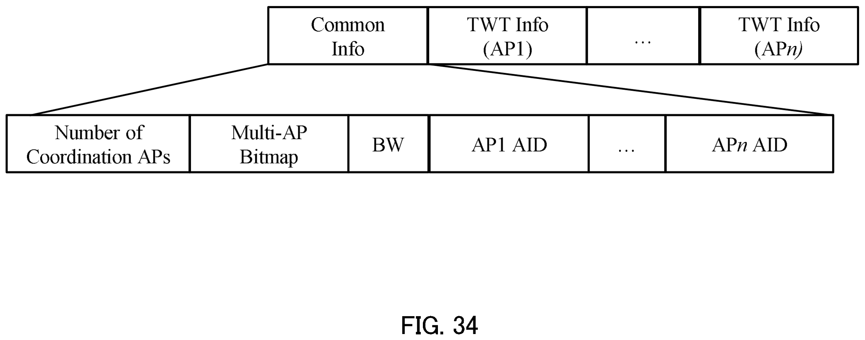

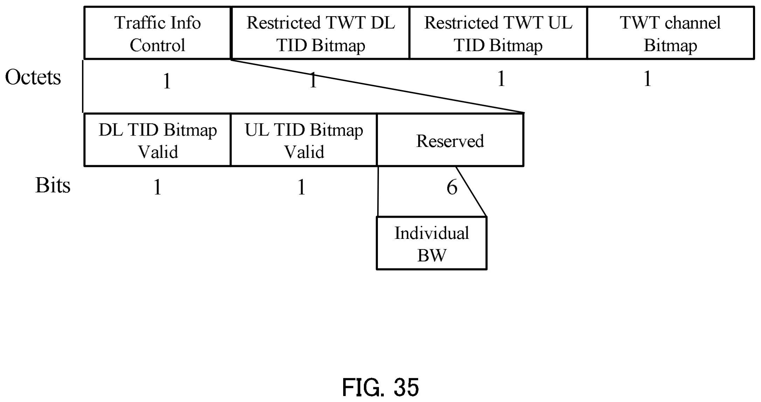

Furthermore, for example, the Multi-AP bitmap may indicated that overlapping transmission is allowed for C-OFDMA, Common Info may indicate the full-bandwidth information common to the coordination APs (for example, BW subfield) as illustrated in FIG. 34, and AP Info may indicate channel information that can be temporarily used by each AP in the R-TWT SP (for example, primary channel information) as illustrated in FIG. 35. For example, the primary channel information includes a 20 MHz channel (for example, primary channel) that can be used by each AP and a bandwidth that can be used by each AP.

For example, the "individual BW subfield" of the Traffic Info Control included in the TWT Info indicates the bandwidth that can be used by each AP.

In addition, the "TWT channel bitmap subfield" of the Restricted TWT Traffic Info of the TWT Info indicates a 20 MHz channel (for example, primary channel) that can be used by each AP. For example, each bit of the TWT channel bitmap subfield corresponds to a 20 MHz channel, and any bit of the TWT channel bitmap is 1.

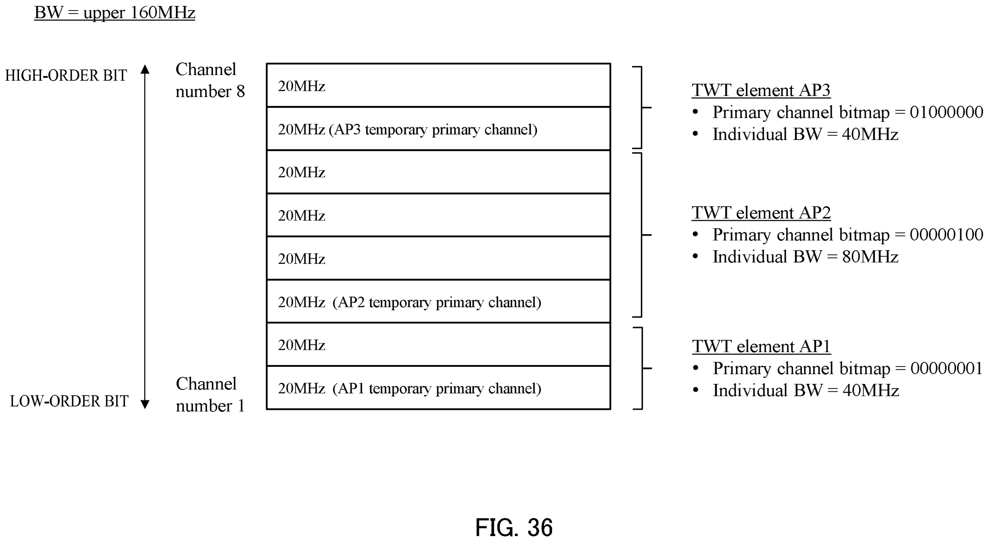

FIG. 36 illustrates, as an example, the indication of the primary channel that can be temporarily used by each AP when 160 MHz (for example, BW = upper 160 MHz) is indicated by the BW subfield.

In the example of FIG. 36, the TWT channel bitmap subfield is represented by 8 bits. As an example, it is indicated to AP 2 that TWT channel bitmap subfield = 00000100 and individual BW subfield = 80 MHz. In this case, in FIG. 36, AP 2 configures the 20 MHz channel with channel number 3 corresponding to "1" in the TWT channel bitmap as the primary channel that can be temporarily used, and configures 80 MHz (for example, channel numbers 3 to 6) including the primary channel as the bandwidth that can be used.

Note that, in FIG. 36, AP 100 configures the bandwidth indicated by the Individual BW subfield in ascending order with the primary channel (for example, the channel indicated by the TWT channel bitmap subfield) as a reference, but may configure the bandwidth in descending order. In addition, in a case where 20 MHz, 40 MHz, or 80 MHz is indicated in the BW subfield, AP 100 need not refer to the upper 7, 6, and 4 bits of the TWT channel bitmap subfield.

Next, an example of the negotiation of the R-TWT in which C-OFDMA is performed between APs will be described.

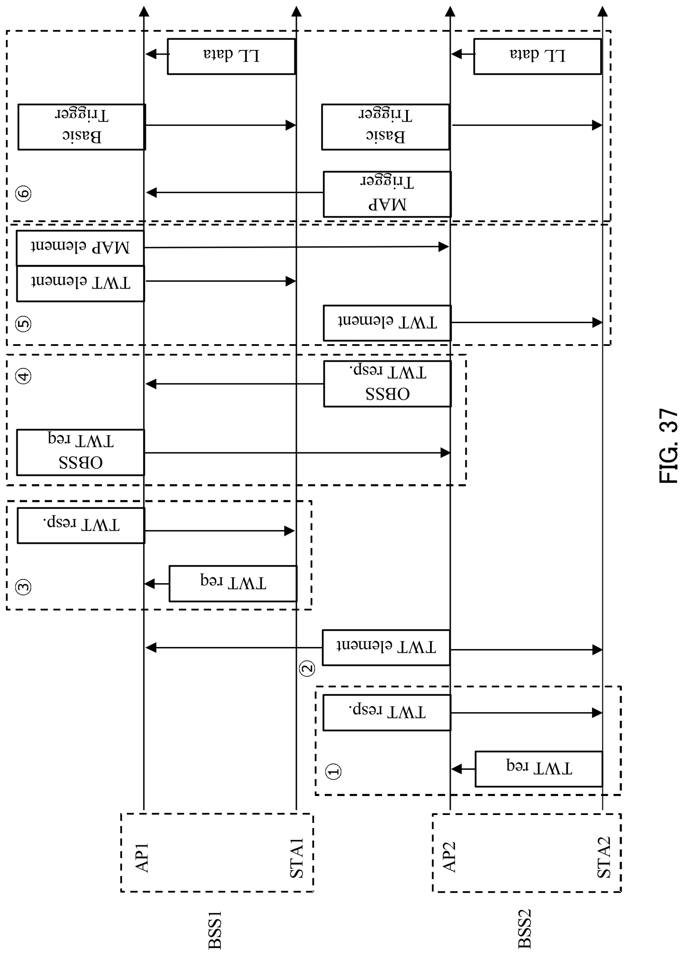

FIG. 37 illustrates an example in which Multi-AP overlap permission information is included in the negotiation signal (for example, OBSS TWT request/OBSS TWT response) exchanged between APs.

### (1) TWT agreement procedure (or R-TWT membership configuration procedure) in BSS 2

For example, an R-TWT SP (for example, referred to as SP#2) is configured between AP 2 and STA 2 in BSS 2 by TWT request and TWT response. Note that a TWT element may be used for the indication of the TWT response and the TWT request.

### (2) R-TWT announcement procedure of BSS 2

For example, the R-TWT information of BSS 2 is indicated from AP 2 of BSS 2 to AP 1 of BSS 1 and STA 2 of BSS 2 by including the TWT element in Beacon or the like.

### (3) TWT agreement procedure in BSS 1

For example, an R-TWT SP (referred to as SP#1) is configured between AP 1 and STA 1 in BSS 1 by TWT request and TWT response. For example, an R-TWT SP (SP#1) that does not overlap with SP#2 is configured between AP 1 and STA 1.

### (4) R-TWT negotiation between APs

For example, using OBSS TWT request for which the TWT element is included in the Beacon or the like, AP 1 requests C-OFDMA scheduling from AP 2. AP 2 indicates whether C-OFDMA scheduling is allowed or the scheduling result using an OBSS TWT response. For example, in a case where C-OFDMAis permitted from AP 2, AP 1 configures the R-TWT SP (for example, referred to as "MAP R-TWT SP") of BSS 1 that overlaps with the R-TWT SP (SP#2) of the OBSS (for example, BSS 2). In addition, for example, in a case where the C-OFDMA is rejected from AP 2, AP 1 configures the R-TWT SP of BSS 1 that does not overlap with the R-TWT SP (SP#2) of BSS 2.

### (5) R-TWT announcement procedure of BSS 1

For example, in a case where there is a change in the R-TWT SP of BSS 1 and BSS 2 as a result of the R-TWT negotiation result in the procedure (4), APs (AP 1 and AP 2) indicate the information to respective STAs served by the APs by including the TWT element in a Beacon signal or the like. In addition, AP 1 indicates the information to AP2 by including the resource request information for the Multi-AP coordinated transmission in a Multi-AP element.

### (6) C-OFDMA processing in Multi-AP R-TWT

For example, the AP/STA of each BSS transmits low latency traffic by using a specified resource. Note that AP 1/AP 2 and STA 1/STA 2 may act as members of the Multi-AP R-TWT.

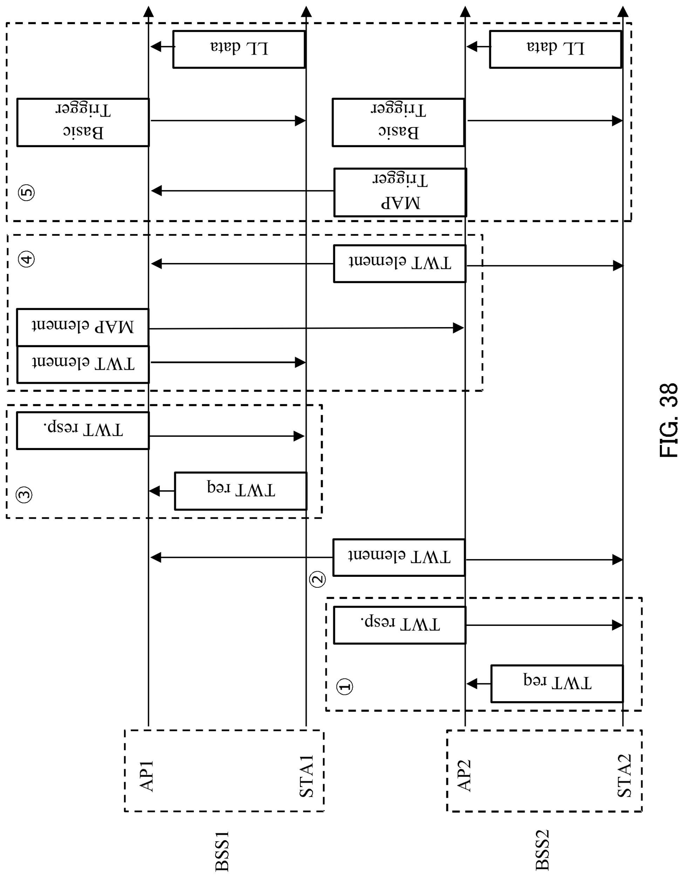

FIG. 38 illustrates an example in which the Multi-AP overlap permission information is included in the signal unilaterally transmitted from AP to another AP. Procedures (1) to (5) illustrated in FIG. 38 correspond to procedures (1) to (3), (5), and (6) illustrated in FIG. 37, respectively. The processing illustrated in FIG. 38 is different from that in FIG. 37 in the following points.

### (2) R-TWT announcement procedure of BSS 2

For example, at least one of Multi-AP coordination availability information and/or the resource information that can be used by BSS 1 in the R-TWT SP of BSS 2 is indicated from AP 2 of BSS 2 to AP 1 of BSS 1 and STA 2 of BSS 2 together with the R-TWT information of BSS 2 by including the TWT element in the Beacon or the like.

### (4) R-TWT announcement procedure of BSS 1

AP 1 configures an R-TWT SP (Multi-AP R-TWT) of BSS 1 that overlaps with the R-TWT SP of BSS 2 based on the resource information indicated in the procedure (2). AP 1 indicates the R-TWT SP to STA 1 by including the TWT element in a Beacon signal or the like. In addition, AP 1 indicates the R-TWT SP to AP 2 by including the resource request information for the Multi-AP coordinated transmission in a Multi-AP element.

As described above, according to Methods 2-3, by the R-TWT information, the frequency resource can be divided for each AP to use by indicating the frequency resource information of C-OFDMA, interference to the low latency traffic of the OBSS can be reduced, and low latency traffic can be transmitted in the BSS.

### (Method 3)

In Method 3, AP 100 indicates the R-TWT information of OBSS to STA 200 served by AP 100.

### <Indication Method 3-1>

For example, AP 100 may indicate the R-TWT information of BSS and the R-TWT information of OBSS to STA 200 served by AP 100.

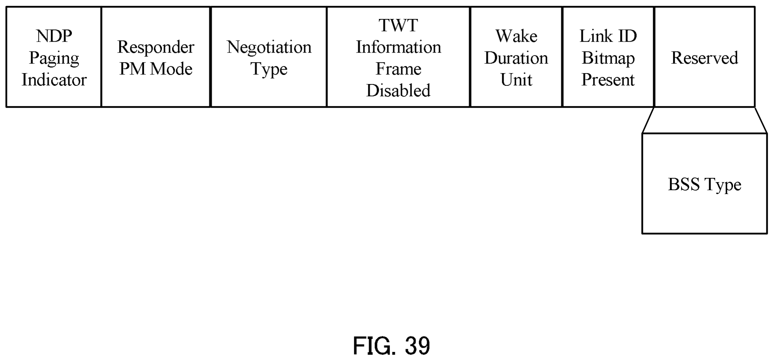

For example, as illustrated in FIG. 39, AP 100 may indicate, using the "BSS Type subfield" of the Control field included in the TWT element, whether the R-TWT information indicated to STA 200 is the R-TWT information of BSS or the R-TWT information of OBSS. As an example, the R-TWT information of BSS is indicated when the BSS type subfield = 0, and the R-TWT information of OBSS is indicated when the BSS type subfield = 1.

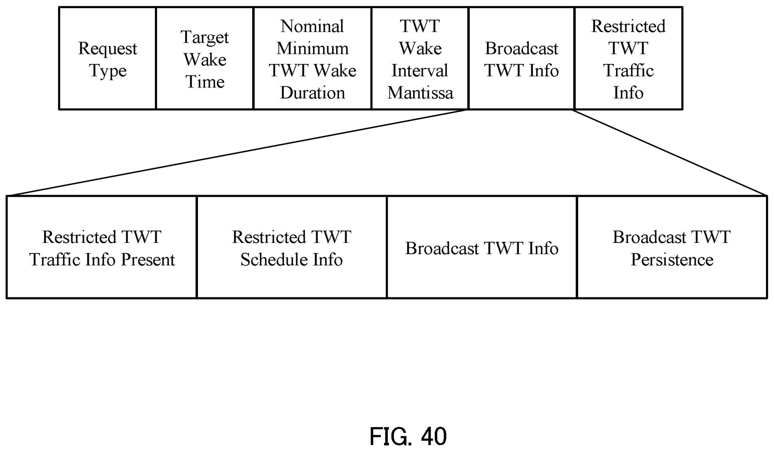

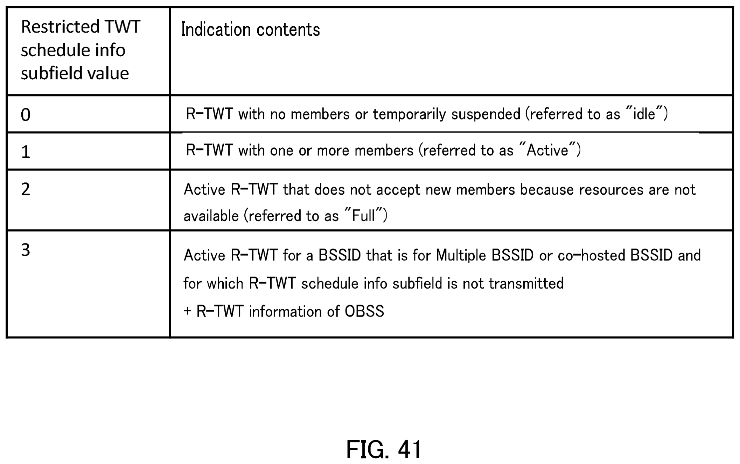

In addition, for example, as illustrated in FIG. 40, AP 100 may indicate whether the R-TWT information indicated to STA 200 is the R-TWT information of BSS or the R-TWT information of OBSS, in the "Restricted TWT Schedule Info subfield" in the Broadcast TWT Info subfield included in the TWT element. FIG. 41 illustrates an example of a relationship between the value of the Restricted TWT Schedule Info subfield and the indication content. As illustrated in FIG. 41, for example, it may be indicated that the R-TWT information is the R-TWT information of OBSS when the Restricted TWT schedule Info subfield = 3. In addition, for example, it may be indicated that the R-TWT information is the R-TWT information of BSS when the value of the Restricted TWT schedule Info subfield is different from 3.

### <Indication Method 3-2>

For example, AP 100 may indicate the R-TWT information determined based on the R-TWT information of OBSS, to STA 200 served by AP 100.

For example, the R-TWT information to be indicated to STA 200 may include at least information on the start timing of the R-TWT SP indicated by the R-TWT information of OBSS and the same information as the time duration of the R-TWT SP.

As described above, according to Method 3, by indicating the R-TWT information of OBSS to STA 200 served by AP 100, AP 100 can also indicate the R-TWT information of OBSS to STA 200 that is placed outside the transmission range of OBSS AP. As a result, for example, even STA 200 placed outside the transmission range of OBSS AP can control the operation in the R-TWT SP of the OBSS, thereby suppressing interference to the low latency traffic of OBSS from STA 200 placed outside the transmission range of the OBSS AP.

### (Method 4)

In Method 4, AP 100 and STA 200 determine transmission processing based on the R-TWT information of OBSS.

For example, the R-TWT information of OBSS may be the OBSS R-TWT information acquired from the signal transmitted from OBSS AP or the OBSS R-TWT information acquired from the signal transmitted from AP 100 of the associated BSS.

### <Method 4-1>

In Method 4-1, AP 100 determines a transmission method in the BSS to which AP 100 belongs, based on the overlap permission information indicated from OBSS AP. The transmission method in the BSS to which AP 100 belongs may be, for example, a configuration related to overlap permission for the UL communication of STA 200.

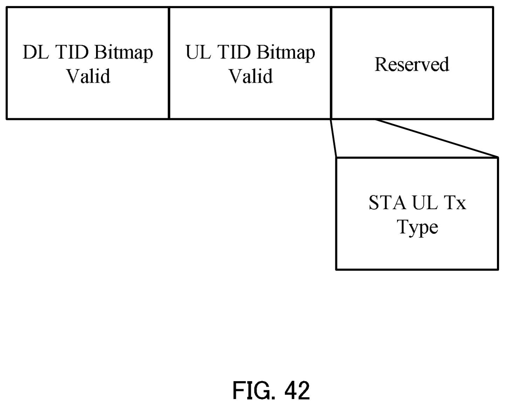

For example, the overlap permission information related to the UL communication of STA 200 may be indicated by a "STA UL Tx Type subfield" included in the Traffic Info Control of the TWT element as illustrated in FIG. 42.

For example, the STA UL Tx Type subfield may indicate either "no transmission restriction" or "only trigger-based transmission is allowed."

For example, "no transmission restriction" is indicated when the STA UL Tx Type subfield = 0. In the R-TWT period, STA 200 may perform UL transmission by acquiring the transmission right (e.g., transmission opportunity) by carrier sensing, or perform UL transmission by TB PPDU (for example, Trigger-based transmission) in response to the Trigger frame transmitted from AP 100.

In addition, for example, "only trigger-based transmission is allowed" is indicated when the STA UL Tx Type subfield = 1. In the R-TWT period, UL transmission of STA 200 is permitted only for the TB PPDU transmission in response to the Trigger frame transmitted from AP 100. In other words, in the R-TWT period, STA 200 does not acquire the transmission right by performing carrier sensing.

In addition, for example, AP 100 may determine the destination STA of the Trigger frame based on a Buffer Status Report related to low latency traffic received from STA 200.

In addition, when the STA UL Tx Type subfield = 1, AP 100 may broadcast the Trigger frame indicating random access UL transmission to STA 200 served by AP 100 without specifying the destination STA of the Trigger frame. In this case, AP 100 may configure (or indicate) a traffic type (TID) for which transmission is allowed, in the random access UL transmission.

In addition, STA 200 that can perform random access UL transmission is not limited to the STA participating in the R-TWT (for example, member STA). For example, in a case where transmission of bursty low latency traffic is desired, STA 200 may perform random access UL transmission even though the STA is a non-member STA.

In addition, STA 200 may indicate to AP 100 that additional low latency traffic is present, by setting More Data subfield to 1 in the MAC header included in the TB PPDU to be transmitted by random access UL transmission. When AP 100 receives the signal with More Data subfield = 1, AP 100 may transmit a Trigger frame including STA 200 that has transmitted the signal with More Data subfield = 1 in the destination information to request the transmission of the additional low latency traffic.

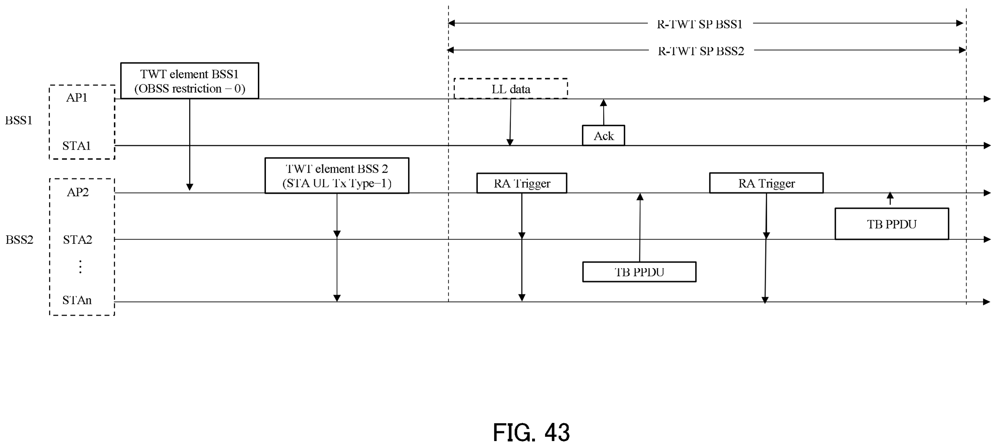

FIG. 43 illustrates an operation example in a case where UL transmission of STA 200 is limited to Trigger-based transmission.

In FIG. 43, AP 1 of BSS 1 indicates, to AP 2, that overlapping transmission is allowed in the R-TWT SP of BSS 1 (for example, OBSS restriction = 0) using a TWT element.

AP 2 determines an R-TWT SP having the same period as BSS 1 based on the TWT element received from AP 1, and indicates a TWT element to STAs (STA 2 to STA n) served by AP 2 by the TWT element. In this case, STA UL Tx Type subfield = 1 ("only Trigger-based transmission is allowed") may be configured in the TWT element.

In the R-TWT SP of BSS 1 and BSS 2, AP 1 transmits low latency traffic to STA 1. In addition, based on the frequency resource used by AP1 for the transmission of low latency traffic, AP 2 indicates, to STAs served by AP 2, performing random access UL transmission using an unused frequency resource, by a random access (RA) Trigger frame. STA 2 to STA n of BSS 2 that have received the RA Trigger frame acquire the respective transmission rights of the frequency resources for random access based on the OFDMA back-off (OBO) process of the random access. In the example of FIG. 43, in the first RA Trigger frame, STA n acquires the transmission right for the random access. In addition, in the example of FIG. 43, in the second RA Trigger frame, the RA Trigger frame including the frequency resource not used by BSS 1 is transmitted to STAs of BSS 2, and STA2 acquires the transmission right for the random access.

As described above, by limiting the UL transmission to Trigger-based transmission, the frequency resource not used by the OBSS can be indicated to a plurality of STAs, resource contention between APs/STAs can be avoided, and a plurality of STAs can transmit low latency traffic.

### <Method 4-2>

In Method 4-2, AP 100 and STA 200 determine a transmission period in BSS based on overlap permission information indicated from OBSS AP.

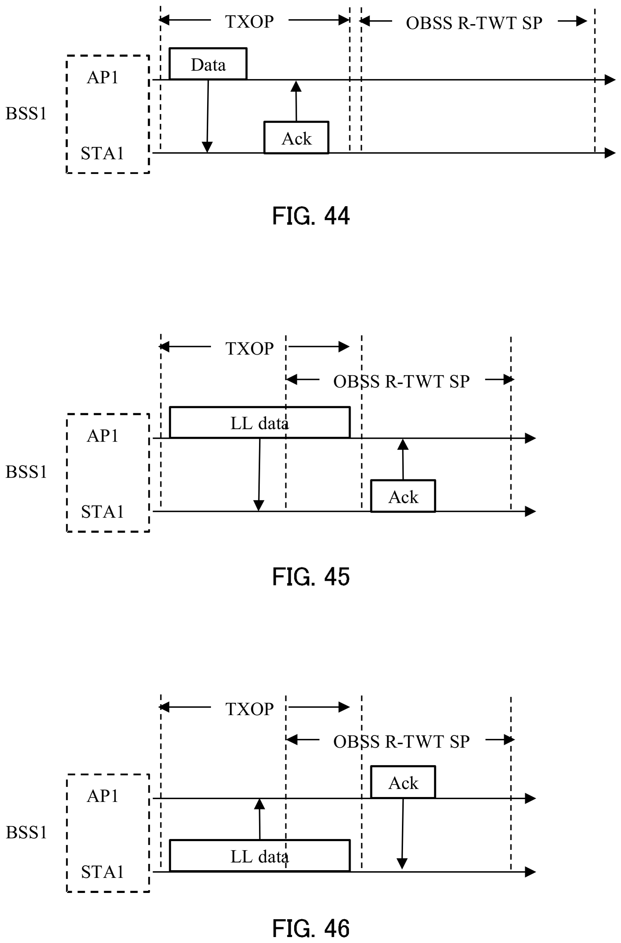

For example, AP 100 and STA 200 that are owners of the transmission right (for example, referred to as "TXOP owner") end the TXOP before the start of the R-TWT SP in a case where the overlapping transmission in the R-TWT SP to be started immediately after is prohibited (or non-permitted) or in a case where AP 100 and STA 200 are non-members of the R-TWT SP. For example, as illustrated in FIG. 44, AP 1 that is the TXOP owner ends the TXOP before the start of the OBSS R-TWT SP. This avoids interference to the low latency traffic transmitted in the OBSS R-TWT SP, and the OBSS AP/STA can quickly transmit the low latency traffic.

In addition, for example, AP 100 that is the TXOP owner does not end the TXOP before the start of the R-TWT SP in a case where AP 100 is a member of the R-TWT SP to be started immediately after and transmits the data (for example, link type or traffic type) for which overlapping transmission is permitted in the R-TWT SP. For example, as illustrated in FIG. 45, AP 1 that is the TXOP owner does not stop the transmission of low latency traffic even when the OBSS R-TWT SP is started (does not end TXOP). This allows AP 1 to quickly transmit the low latency traffic addressed to STA 1.

In addition, for example, STA 200 that is the TXOP owner does not end the TXOP before the start of the R-TWT SP in a case where STA 200 is a member of the R-TWT SP to be started immediately after and transmits the data (for example, link type, traffic type, or R-TWT type) for which overlapping transmission is permitted in the R-TWT SP. For example, as illustrated in FIG. 46, in a case where the R-TWT type of the OBSS R-TWT SP is non-Trigger-enable R-TWT, STA 1 does not end the TXOP even when the OBSS R-TWT SP starts. This allows STA 1 to quickly transmit the low latency traffic addressed to AP 1. In addition, in a case where the R-TWT type of the OBSS R-TWT SP is Trigger-enable R-TWT, STA 1 ends the TXOP before the start of the OBSS R-TWT SP (not illustrated). This reduces the probability that the transmission of the Trigger frame by the OBSS AP is delayed due to the transmission of STA 1.

In addition, for example, AP 100 and STA 200 that are the TXOP owners do not end the TXOP before the start of the R-TWT SP in a case where the interference level received from the OBSS AP/STA that performs transmission and reception in the R-TWT SP to be started immediately after is less than a predetermined value, and AP 100 and STA 200 that are the TXOP owners end the TXOP before the start of the R-TWT SP in a case where the interference level received from the OBSS AP/STA is equal to or greater than the predetermined value. Note that the value of the interference level used as a reference by the AP/STA may be the value indicated by the R-TWT information received from AP 100 or the OBSS AP. AP 100 and STA 200 may determine the interference level of the OBSS AP/STA by referring to, for example, the measurement report measured most recently. In addition, AP 100 and STA 200 may specify which BSS the interference signal is from, by referring to the BSS color included in the Preamble. In a case where the interference level from the OBSS AP/STA is less than the predetermined value, it can be determined that the interference to the low latency traffic of the OBSS AP/STA from the signal with low latency traffic of AP 100 and STA 200 is also low. This makes it possible to simultaneously and quickly transmit low latency traffic of BSSs by using the same spatial resource.

In addition, for example, AP 100 and STA 200 that are the TXOP owners do not end the TXOP before the start of the R-TWT SP, in a case where the frequency resource used in the R-TWT SP to be started immediately after and the frequency resource acquiring TXOP are different from each other. On the other hand, AP 100 and STA 200 that are the TXOP owners end the TXOP before the start of the R-TWT SP, in a case where the frequency resource used in the R-TWT SP to be started immediately after and the frequency resource acquiring TXOP are the same (or overlap). This enables transmission of low latency traffic in each of a plurality of frequency resources, and thus the low latency traffic of each BSS can be quickly transmitted.

The embodiments of the present disclosure have been each described, thus far.

Note that Methods 1 to 4 described above can be applied to any R-TWT type (for example, Trigger-enable R-TWT or non-Trigger-enable TWT).

Furthermore, in the above-described embodiment, in a case where "overlapping transmission is allowed" and "overlapping transmission is prohibited (or non-permitted)" are indicated for the same transmission period from a plurality of BSSs, AP100 and STA 200 may prioritize "overlapping transmission is prohibited (or non-permitted)." This avoids interference to low latency traffic.

In addition, in the above-described embodiment, AP 100 and STA 200 may be configured to be the member AP and the member STA of a plurality of R-TWTs.

Moreover, in the above-described embodiment, an AID for OBSS (for example, OBSS AID) may be assigned when an OBSS STA is added to the member of the R-TWT. In addition, the AID of the STA may be shared and assigned between the BSS AP and the OBSS AP. In a case where the shared AID is used, and the same AID is assigned in the plurality of BSSs, AP 100 and STA 200 may distinguish whether the AID is the AID of the BSS or the AID of the OBSS based on the information for identifying BSS (for example, BSS color), for example.

In addition, in the above-described embodiment, AP 100 may define a new R-TWT based on the TWT element received from the OBSS AP and indicate the new R-TWT to a non-UHR STA (for example, EHT STA) served by AP 100.

For example, in the case of the OBSS R-TWT in which overlapping transmission is allowed, AP 100 may indicate a TWT element including the same control information (for example, including start timing, period length, R-TWT type, transmittable link type or traffic type, and the like of R-TWT SP) as the contents of the TWT element received from the OBSS AP, to the non-UHR STA (for example, EHT STA) that supports R-TWT. Accordingly, the EHT STA can transmit low latency traffic by recognizing the OBSS R-TWT as the R-TWT of the BSS to which the EHT STA belongs.

In addition, for example, in the case of the OBSS R-TWT in which overlapping transmission is prohibited (or non-permitted), AP 100 defines an R-TWT that includes the same control information as the contents of the TWT element received from the OBSS AP and include no member STAs, and indicates the R-TWT to the non-UHR STA (for example, EHT STA) that support R-TWT. This allows the EHT STA to stop transmission in the R-TWT SP period in which the EHT-STA is a non-member.

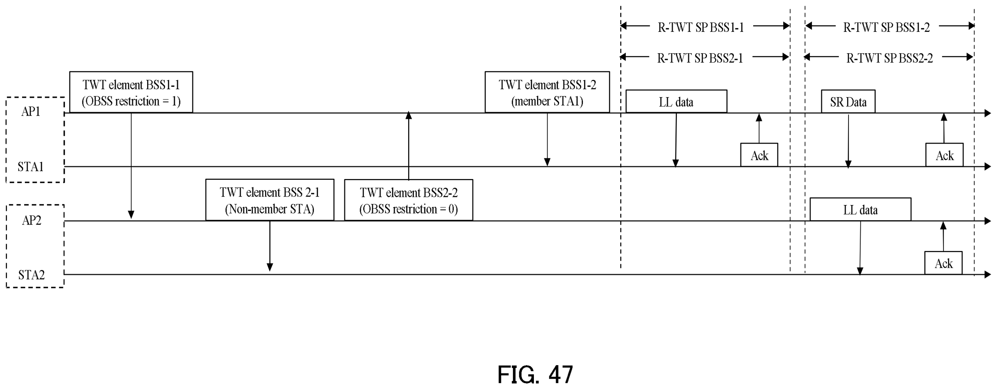

FIG. 47 illustrates an operation example in a case where the R-TWT determined based on the TWT element received from the OBSS AP is indicated to the EHT STA.

In FIG. 47, AP 1 indicates, to AP 2, that overlapping transmission is prohibited (non-permitted) in R-TWT SP BSS 1-1 (for example, OBSS restriction = 1), by a TWT element. AP 2 defines R-TWT SP BSS 2-1 that has the same period as the R-TWT SP BSS 1-1 and includes no member STA, based on the information of the TWT element received from AP 1, and indicates the information to STA 2 served by AP 2 by a TWT element.

In addition, in FIG. 47, AP 2 indicates, to AP 1, that overlapping transmission is allowed in R-TWT SP BSS 2-2 (for example, OBSS restriction = 0), by a TWT element. AP 1 defines R-TWT SP BSS 1-2 that has the same period as the R-TWT SP BSS 2-2 and has a traffic type treated as low latency traffic, based on the information of the TWT element received from AP 2, and indicates the information to STA 1 served by AP 1.

As a result, as illustrated in FIG. 47, AP 1 of BSS 1 transmits low latency traffic in the period of the R-TWT SP BSS 1-1 and the R-TWT SP BSS 2-1, and the signal is not transmitted in BSS 2. In addition, as illustrated in FIG. 47, in the period of the R-TWT SP BSS 1-2 and the R-TWT SP BSS 2-2, the low latency traffic of AP 2 of BSS 2 and the SR signal of AP 1 of BSS 1 are transmitted by overlapping with each other.

In addition, in each of the above-described embodiments, low latency traffic has been described as the traffic type transmitted in the R-TWT SP, but the traffic type transmitted in the R-TWT SP is not limited to low latency traffic, and may be another type of traffic.

In addition, in each of the above-described embodiments, the field (or subfield) used for the indication of the control information is merely an example, and another field or subfield may be used. In addition, the number of bits used for the indication of the control information in each field or subfield is merely an example, and another number of bits may be used.

In addition, the format of the signal described in each of the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on the difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure is an access point and includes: control circuitry, which, in operation, determines first information related to a configuration of a priority transmission period of a first network to which the access point belongs; and transmission circuitry, which, in operation, transmits the first information to an apparatus of a second network to which the access point does not belong.

In the embodiment of the present disclosure, the first information is included in either a Management frame or a Public action frame.

In the embodiment of the present disclosure, further including reception circuitry, which, in operation, receives a Measurement report from a terminal belonging to the first network, the Measurement report including information related to a configuration of a priority transmission period of the second network, and the information being transmitted from an access point belonging to the second network.

In the embodiment of the present disclosure, the transmission circuitry transmits information related to a difference in transmission timing between the first network and the second network.

In the embodiment of the present disclosure, the transmission circuitry transmits the first information to an access point and a terminal that belong to the second network.

In the embodiment of the present disclosure, the transmission circuitry transmits the first information to an access point that belongs to the second network.

In the embodiment of the present disclosure, the transmission circuitry transmits the first information to at least one of an access point belonging to a group that performs coordinated communication and includes the access point and/or an access point that joins the group.

In the embodiment of the present disclosure, the transmission circuitry transmits second information related to whether to permit overlap of a priority transmission period of the second network with the priority transmission period of the first network.

In the embodiment of the present disclosure, the second information is bit information indicating either permission or prohibition (non-permission) of the overlap.

In the embodiment of the present disclosure, the second information is information related to participation of an access point or a terminal in the configuration of the priority transmission period.

In the embodiment of the present disclosure, the second information is information related to transmission suspension.

In the embodiment of the present disclosure, the transmission circuitry transmits third information related to whether to permit coordinated transmission by a plurality of access points in the priority transmission period of the first network.

In the embodiment of the present disclosure, the third information indicates whether to permit the coordinated transmission by an access point of the second network.

In the embodiment of the present disclosure, the third information indicates whether the coordinated transmission is performed by the access point of the first network.

In the embodiment of the present disclosure, the third information indicates whether to permit the coordinated transmission by access points of both the first network and the second network.

In the embodiment of the present disclosure, the third information is information in a bitmap format, and a method for the coordinated transmission and each bit are associated with each other in the information.

In the embodiment of the present disclosure, the third information is information indicating any of a plurality of methods for the coordinated transmission.

In the embodiment of the present disclosure, the third information is included in control information that is related to the coordinated transmission and includes a field common to the plurality of access points and a field specific to each of the plurality of access points.

In the embodiment of the present disclosure, the transmission circuitry transmits fourth information related to a configuration of a priority transmission period of the second network to a terminal served by the access point.

In the embodiment of the present disclosure, the transmission circuitry transmits the first information and the fourth information to a terminal served by the access point.

In the embodiment of the present disclosure, the transmission circuitry transmits, to a terminal served by the access point, information related to a configuration of a priority transmission period determined based on fourth information related to a configuration of a priority transmission period of the second network.

In the embodiment of the present disclosure, the control circuitry controls transmission processing based on fourth information related to a configuration of a priority transmission period of the second network.

In the embodiment of the present disclosure, the fourth information includes information indicating whether to permit communication in the first network in a priority transmission period of the second network, and the control circuitry controls a transmission method in the first network based on the fourth information.

In the embodiment of the present disclosure, the fourth information includes information indicating whether to permit communication in the first network in a priority transmission period of the second network, and the control circuitry determines a transmission period in the first network based on the fourth information.

A terminal according to an embodiment of the present disclosure is a terminal and includes: reception circuitry, which, in operation, receives, in a first network to which the terminal belongs, information related to a configuration of a priority transmission period of a second network to which the terminal does not belong; and control circuitry, which, in operation, controls transmission or reception based on the information.

In a communication method according to an embodiment of the present disclosure, an access point determines first information related to a configuration of a priority transmission period of a first network to which the access point belongs, and transmits the first information to an apparatus of a second network to which the access point does not belong.

In a communication method according to an embodiment of the present disclosure, a terminal receives, in a first network to which the terminal belongs, information related to a configuration of a priority transmission period of a second network to which the terminal does not belong, and controls transmission or reception based on the information.

The disclosure of Japanese Patent Application No. 2023-110803, filed on July 5, 2023, including the specification, drawings and abstract, is incorporated herein by reference in its entirety.

### Industrial Applicability

An exemplary embodiment of the present disclosure is useful for radio communication systems.

### Reference Signs List

100 AP
101, 201 Radio receiver
102, 202 Preamble demodulator
103, 203 Data demodulator
104, 204 Data decoder
105, 205 Low latency traffic controller
106 Scheduler
107 Data generator
108 Data encoder
109 Data modulator
110 Preamble generator
111, 207 Radio transmitter
200 STA
206 Transmission signal generator

## Claims

1. An access point, comprising:
control circuitry, which, in operation, determines first information related to a configuration of a priority transmission period of a first network to which the access point belongs; and
transmission circuitry, which, in operation, transmits the first information to an apparatus of a second network to which the access point does not belong.

2. The access point according to claim 1, wherein
the first information is included in either a Management frame or a Public action frame.

3. The access point according to claim 1, further comprising reception circuitry, which, in operation, receives a Measurement report from a terminal belonging to the first network, the Measurement report including information related to a configuration of a priority transmission period of the second network, and the information being transmitted from an access point belonging to the second network.

4. The access point according to claim 1, wherein
the transmission circuitry transmits information related to a difference in transmission timing between the first network and the second network.

5. The access point according to claim 1, wherein
the transmission circuitry transmits the first information to an access point and a terminal that belong to the second network.

6. The access point according to claim 1, wherein
the transmission circuitry transmits the first information to an access point that belongs to the second network.

7. The access point according to claim 1, wherein
the transmission circuitry transmits the first information to at least one of an access point belonging to a group that performs coordinated communication and includes the access point and/or an access point that joins the group.

8. The access point according to claim 1, wherein
the transmission circuitry transmits second information related to whether to permit overlap of a priority transmission period of the second network with the priority transmission period of the first network.

9. The access point according to claim 1, wherein
the transmission circuitry transmits third information related to whether to permit coordinated transmission by a plurality of access points in the priority transmission period of the first network.

10. The access point according to claim 1, wherein
the transmission circuitry transmits fourth information related to a configuration of a priority transmission period of the second network to a terminal served by the access point.

11. The access point according to claim 1, wherein
the transmission circuitry transmits, to a terminal served by the access point, information related to a configuration of a priority transmission period determined based on fourth information related to a configuration of a priority transmission period of the second network.

12. The access point according to claim 1, wherein
the control circuitry controls transmission processing based on fourth information related to a configuration of a priority transmission period of the second network.

13. A terminal, comprising:
reception circuitry, which, in operation, receives, in a first network to which the terminal belongs, information related to a configuration of a priority transmission period of a second network to which the terminal does not belong; and
control circuitry, which, in operation, controls transmission or reception based on the information.

14. A communication method, comprising:
determining, by an access point, first information related to a configuration of a priority transmission period of a first network to which the access point belongs; and
transmitting, by the access point, the first information to an apparatus of a second network to which the access point does not belong.

15. A communication method, comprising:
receiving, by a terminal, in a first network to which the terminal belongs, information related to a configuration of a priority transmission period of a second network to which the terminal does not belong; and
controlling, by the terminal, transmission or reception based on the information.
